# EUROPEAN PATENT APPLICATION

(11) **EP 4 794 369 A1**
(43) Date of publication of application: **19.08.2026**
(21) Application number: 24884834.3
(22) Date of filing: 30.10.2024
(51) Int. Cl.: H04W 24/00

(54) **TEST METHOD, APPARATUS AND DEVICE, AND STORAGE MEDIUM**

(30) Priority: 31.10.2023 CN 202311435279
(71) Applicant: CHINA MOBILE COMMUNICATION CO., LTD RESEARCH INSTITUTE, Beijing 100053 (CN); CHINA MOBILE COMMUNICATIONS GROUP CO., LTD., Beijing 100032 (CN)
(72) Inventor: SONG, Dan, Beijing 100053 (CN); HAN, Aitong, Beijing 100053 (CN)
(74) Representative: J A Kemp LLP
(86) International application number: PCT/CN2024/128568
(87) International publication number: WO 2025/092834

(57) **Abstract**

The present application discloses a test method, apparatus and device, and a storage medium. The method comprises: executing an in-device coexistence (IDC) problem testing process for a terminal; when a first test result is not obtained, determining whether an IDC problem is detected by the terminal in the IDC problem testing process; and on the basis of the determination of whether an IDC problem is detected by the terminal in the IDC problem testing process, generating a second test result for the terminal.

## Description

### CROSS-REFERENCE TO RELATED APPLICATION

This application is based on and claims priority to Chinese Patent Application No. 202311435279.1, filed on October 31, 2023, the contents of which are incorporated herein by reference in its entirety.

### TECHNICAL FIELD

The present disclosure relates to the technical field of equipment testing, and in particular to a testing method, apparatus and equipment, and a storage medium.

### BACKGROUND

In the related art, a minimization of drive test (MDT) function for a wireless network (i.e., a radio access network (RAN)) is defined. A measurement report for MDT (i.e., an MDT measurement report) from a terminal (also referred to as a user equipment (UE)) can be transmitted through a control plane. The terminal can output the MDT measurement report according to a definition in the related art. An analysis of wireless network quality by examining a signaling procedure and a measurement result in the MDT measurement report can minimize a workload of the drive test (DT). MDT data defined in the related art (such as data in the MDT measurement report) can be collected in two different modes: an immediate mode and a logged mode. For the logged mode, in the related art, an in-device co-existence (IDC) mechanism has been introduced into MDT. In order to verify whether a MDT function of the terminal has an IDC mechanism that meets requirements of the related art, a test mechanism for an IDC problem is also defined in the related art.

However, the test mechanism in the related art may not be able to accurately determine whether the terminal correctly supports the related function of the IDC problem, that is, it may not be possible to accurately determine whether the MDT function of the terminal has an IDC mechanism that meets the requirements of the related art.

### SUMMARY

In order to solve related technical problems, embodiments of the present disclosure provide a testing method, apparatus and equipment, and a storage medium.

The technical solutions according to the embodiments of the present disclosure are implemented as follows.

An embodiment of the present disclosure provides a testing method, including:
performing an IDC problem test procedure on a terminal;
in a case where a first test result is not obtained, confirming whether the terminal detected an IDC problem in the IDC problem test procedure; and
generating a second test result for the terminal based on the confirmation of whether the terminal detected the IDC problem in the IDC problem test procedure.

In the above solution, the operation of confirming whether the terminal detected the IDC problem in the IDC problem test procedure includes:
constructing at least one test condition identical to that for the IDC problem test procedure;
for each of the at least one test condition, measuring at least one index associated with the IDC problem for the terminal to obtain at least one measurement result of the terminal; and
confirming whether the terminal detected the IDC problem in the IDC problem test procedure based on the at least one measurement result.

In the above solution, the operation of confirming whether the terminal detected the IDC problem in the IDC problem test procedure includes:
during executing the IDC problem test procedure on the terminal, for each of at least one constructed test condition, measuring at least one index associated with the IDC problem for the terminal, to obtain at least one measurement result of the terminal; and
confirming whether the terminal detected the IDC problem in the IDC problem test procedure based on the at least one measurement result.

In the above solution, for a first test condition, measuring at least one index associated with the IDC problem for the terminal; or,
measuring, for a first test condition and a second test condition, at least one index associated with the IDC problem for the terminal, respectively;
where under the first test condition, an operating channel of a first receiver and an operating channel of a first transmitter of the terminal are configured to be in a minimum spacing state;
under the second test condition, the operating channel of the first receiver and the operating channel of the first transmitter of the terminal are configured to be in a maximum spacing state.

In the above solution, the first transmitter is configured as being off under the second test condition.

In the above solution, the index associated with the IDC problem include at least one of the following:
a reference sensitivity of a first receiver of the terminal; or
a throughput of the first receiver of the terminal.

In the above solution, the operation of confirming whether the terminal detected the IDC problem in the IDC problem test procedure based on the at least one measurement result includes that:
when the at least one measurement result does not satisfy the first test requirement, it is indicated that the terminal detected the IDC problem in the IDC problem test procedure; or
when the at least one measurement result satisfies the first test requirement, it is indicated that the terminal did not detect the IDC problem in the IDC problem test procedure.

In the above solution, N indices associated with the first test requirement are included, and N is an integer greater than or equal to 1. Satisfying the first test requirement includes at least one of:
at least one of the N indices is better than or equal to a corresponding threshold; or
a change of at least one of the N indices is better than or equal to a corresponding threshold.

In the above solution, the satisfying the first test requirement includes at least one of:
a reference sensitivity of a first receiver of the terminal under a first test condition is better than or equal to a first threshold;
a throughput of the first receiver of the terminal under the first test condition is better than or equal to a second threshold;
a change in the reference sensitivity of the first receiver of the terminal under the first test condition and a second test condition is better than or equal to a third threshold; or
a change in the throughput of the first receiver of the terminal under the first test condition and the second test condition is better than or equal to a fourth threshold;
where under the first test condition, an operating channel of the first receiver and an operating channel of a first transmitter of the terminal are configured to be in a minimum spacing state;
under the second test condition, the operating channel of the first receiver and the operating channel of the first transmitter of the terminal are configured to be in a maximum spacing state.

In the above aspect, the method further includes that:
determining the third threshold and/or the fourth threshold based on a capability level of the terminal, where different capability levels correspond to different values of the third threshold and/or the fourth threshold.

In the above solution, the operation of generating the second test result for the terminal according to whether the terminal detected the IDC problem in the IDC problem test procedure includes:
in a case where the terminal detected the IDC problem in the IDC problem test procedure, the second test result indicates that the terminal does not pass the test;
in a case where the terminal did not detect the IDC problem in the IDC problem test procedure, the second test result indicates that the terminal passes the test.

An embodiment of the present disclosure also provides a testing method, including:
confirming whether a terminal detected an IDC problem;
in a case where it is confirmed that the terminal detected the IDC problem, executing an IDC problem test procedure on the terminal to generate a third test result for the terminal; or
in a case where it is confirmed that the terminal did not detect the IDC problem, executing an IDC problem construction procedure on the terminal; after the IDC problem construction procedure is completed, executing the IDC problem test procedure on the terminal to generate a third test result for the terminal.

In the above solution, the operation of confirming whether the terminal detected the IDC problem includes:
constructing at least one test condition;
for each of the at least one test condition, measuring at least one index associated with the IDC problem on the terminal to obtain at least one measurement result of the terminal; and
confirming whether the terminal detected the IDC problem based on the at least one measurement result.

In the above solution, the index associated with the IDC problem include at least one of the following:
a reference sensitivity of a second receiver of the terminal; or
a throughput of the second receiver of the terminal.

In the above solution, the operation of confirming whether the terminal detected the IDC problem based on the at least one measurement result including:
in a case where the at least one measurement result satisfies a second test requirement, it is indicated that the terminal did not detect the IDC problem; or
in a case where the at least one measurement result does not satisfy the second test requirement when the second transmitter of the terminal is configured as not being off, and the at least one measurement result satisfy the second test requirement when the second transmitter of the terminal is configured as being off, it is indicated that the terminal detected the IDC problem.

In the above aspect, the method further includes:
in a case where the at least one measurement result does not satisfy a second test requirement when a second transmitter of the terminal is configured as being off; or,
in a case where the at least one measurement result does not satisfy the second test requirement when the second transmitter of the terminal is configured as not being off, and the at least one measurement result also does not satisfy the second test requirement when the second transmitter of the terminal is configured as being off,
generating a fourth test result for the terminal, the fourth test result indicating that the terminal does not pass the test.

In the above solution, N indices associated with the second test requirement are included, and N is an integer greater than or equal to 1. Satisfying the second test requirement includes at least one of:
at least one of the N indices is better than or equal to a corresponding threshold; or
a change of at least one of the N indices is better than or equal to a corresponding threshold.

In the above solution, the satisfying the second test requirement includes at least one of:
a reference sensitivity of a second receiver of the terminal under a third test condition is better than or equal to a fifth threshold;
a throughput of the second receiver of the terminal under the third test condition is better than or equal to a sixth threshold;
a change in the reference sensitivity of the second receiver of the terminal under the third test condition and a fourth test condition is better than or equal to a seventh threshold; or
a change in the throughput of the second receiver of the terminal under the third test condition and the fourth test condition is better than or equal to an eighth threshold;
where under the third test condition, an operating channel of a second receiver and an operating channel of a second transmitter of the terminal are configured to be in a maximum spacing state;
under the fourth test condition, the operating channel of the second receiver and the operating channel of the second transmitter of the terminal are configured to be in a minimum spacing state.

In the above aspect, the method further includes:
constructing at least one test condition;
for each of the at least one test condition, measuring at least one index associated with the IDC problem on the terminal to obtain at least one measurement result of the terminal; and
in a case where the at least one measurement result does not satisfy a second test requirement when a second transmitter of the terminal is configured as being off, or,
in a case where the at least one measurement result does not satisfy the second test requirement when the second transmitter of the terminal is configured as not being off, and the at least one measurement result also does not satisfy the second test requirement when the second transmitter of the terminal is configured as being off,
generating a fourth test result for the terminal, the fourth test result indicating that the terminal does not pass the test.

In the above solution, the operation of executing the IDC problem test procedure on the terminal after the IDC problem construction procedure is completed includes:
after the IDC problem construction procedure is completed and the terminal detected an IDC problem, executing the IDC problem test procedure on the terminal.

In the above solution, during the IDC problem construction procedure, the fifth test condition is used as an initial test condition, and the operating channel of the second receiver of the terminal and the operating channel of the second transmitter are arranged to be close to each other, or the operating channel of the second transmitter of the terminal is arranged to be close to the operating channel of the second receiver, or the operating channel of the second receiver of the terminal is arranged to be close to the operating channel of the second transmitter; where under the fifth test condition, the operating channel of the second receiver and the operating channel of the second transmitter of the terminal are configured to be in a maximum spacing state, and the second transmitter is configured as being off;
when the test condition changes, measuring at least one index associated with the IDC problem on the terminal to obtain at least one measurement result of the terminal;
when the at least one measurement result does not satisfy the third test requirement, it is determined that the IDC problem construction procedure is completed, and the terminal detected IDC problem.

In the above solution, N indices associated with the third test requirement are included, and N is an integer greater than or equal to 1. Satisfying the third test requirement includes at least one of:
at least one of the N indices is better than or equal to a corresponding threshold; or
a change of at least one of the N indices is better than or equal to a corresponding threshold.

In the above solution, satisfying the third test requirement includes at least one of:
a reference sensitivity of a second receiver of the terminal is better than or equal to a ninth threshold;
a throughput of the second receiver of the terminal is better than or equal to a tenth threshold;
a change in the reference sensitivity of the second receiver of the terminal under the current test condition and the fifth test condition is better than or equal to an eleventh threshold; or
a change in the throughput of the second receiver of the terminal under the current test condition and the fifth test condition is better than or equal to a twelfth threshold.

In the above solution, the operation of executing the IDC problem construction procedure on the terminal includes:
configuring a first signal to the terminal, the first signal enabling the terminal to detect an IDC problem.

An embodiment of the present disclosure also provides a testing equipment, which includes:
a first testing unit, configured to perform an IDC problem test procedure on a terminal;
a first confirmation unit, configured to confirm whether the terminal detected an IDC problem in the IDC problem test procedure when a first test result is not obtained; and
a second testing unit configured to generate a second test result for the terminal according to the confirmation of whether the terminal detected the IDC problem in the IDC problem test procedure.

An embodiment of the present disclosure also provides a testing apparatus, which includes:
a second confirmation unit, configured to confirm whether a terminal detected an IDC problem; and
a third testing unit, configured to: execute an IDC problem test procedure on the terminal to generate a third test result for the terminal when it is confirmed that the terminal detected the IDC problem; or, in a case where it is confirmed that the terminal did not detect an IDC problem, execute an IDC problem construction procedure on the terminal; after the IDC problem construction procedure is completed, execute the IDC problem test procedure on the terminal to generate a third test result for the terminal.

An embodiment of the present disclosure also provides a testing equipment, including: a communication interface and a processor.
where the processor is configured to: execute an IDC problem test procedure on the terminal; in a case where a first test result is not obtained, confirm whether the terminal detected an IDC problem in the IDC problem test procedure; and generate a second test result for the terminal according to whether the terminal detected an IDC problem in the IDC problem test procedure; or
where the processor is configured to: confirm whether a terminal detected an IDC problem; and when it is confirmed that the terminal detected the IDC problem, execute an IDC problem test procedure on the terminal to generate a third test result for the terminal; or, in a case where it is confirmed that the terminal did not detect an IDC problem, execute an IDC problem construction procedure on the terminal, after the IDC problem construction procedure is completed, execute the IDC problem test procedure on the terminal to obtain a third test result for the terminal.

Embodiments of the present disclosure also provide a testing equipment, including a processor and a memory configured to store a computer program executable by the processor.

The processor is configured to execute the steps of any of the above methods when the computer program is executed.

An embodiment of the present disclosure also provides a storage medium on which a computer program is stored, and when the computer program is executed by a processor, the steps of any of the above methods are implemented.

The testing method, apparatus and equipment, and the storage medium are provided by the embodiments of the present disclosure, in which, executing an IDC problem test procedure on a terminal; in a case where a first test result is not obtained, confirming whether the terminal detected an IDC problem in the IDC problem test procedure; and generating a second test result for the terminal according to whether the terminal detected the IDC problem in the IDC problem test procedure; alternatively, confirming whether a terminal detected an IDC problem; when it is confirmed that the terminal detected the IDC problem, executing an IDC problem test procedure on the terminal to generate a third test result for the terminal, or when it is confirmed that the terminal did not detect the IDC, executing an IDC problem construction procedure on the terminal; after the IDC problem construction procedure is completed, the IDC problem test procedure is executed on the terminal to generate a third test result for the terminal. According to the solutions provided by the embodiments of the present disclosure, after the IDC problem test procedure is executed on the terminal, when the terminal does not pass the test, that is, when a test result that the terminal passes the test (that is, the above-mentioned first test result) is not obtained, whether the terminal detected an IDC problem in the IDC problem test procedure is confirmed, and then a final test result for the terminal is generated according to the confirmed result; alternatively, before executing the IDC problem test procedure for the terminal, first confirming whether the terminal detected the IDC problem, and then executing the IDC problem test procedure for the terminal when it is confirmed that the terminal detected the IDC problem, or first executing the IDC problem construction procedure for the terminal to construct the IDC problem when it is confirmed that the terminal did not detect the IDC problem, and then executing the IDC problem test procedure for the terminal. In this manner, it is possible to avoid misjudging that the terminal does not pass the test in a case where "the IDC problem does not occur due to the excellent design of the terminal (it can be understood that the terminal can support the IDC mechanism and can resolve the IDC problem) in the process of executing the IDC problem test procedure on the terminal. In other words, it is possible to avoid a problem in which the qualified terminal that can support the IDC mechanism is misjudged as the unqualified terminal that cannot support the IDC mechanism, and it is possible to accurately judge whether or not the terminal correctly supports the related function of the IDC problem, that is, it is possible to accurately judge whether or not the MDT function of the terminal has an IDC mechanism that meets the related technical requirements.

### BRIEF DESCRIPTION OF THE DRAWINGS

FIG. 1 is a schematic flowchart of a testing method according to an embodiment of the present disclosure.
FIG. 2 is a schematic flowchart of another testing method according to an embodiment of the present disclosure.
FIG. 3 is a schematic flowchart for confirming whether a terminal detected an IDC problem according to an embodiment of the present disclosure.
FIG. 4 is a schematic diagram of an IDC problem construction procedure according to an embodiment of the present disclosure.
FIG. 5 is a schematic diagram of another IDC problem construction procedure according to an embodiment of the present disclosure.
FIG. 6 is a schematic diagram of a third IDC problem construction procedure according to an embodiment of the present disclosure.
FIG. 7 is a schematic diagram of a fourth IDC problem construction procedure according to an embodiment of the present disclosure.
FIG. 8 is a schematic diagram of a fifth IDC problem construction procedure according to an embodiment of the present disclosure.
FIG. 9 is a schematic diagram of a sixth IDC problem construction procedure according to an embodiment of the present disclosure.
FIG. 10 is a schematic structural diagram of a testing apparatus according to an embodiment of the present disclosure.
FIG. 11 is a schematic structural diagram of another testing apparatus according to the embodiment of the present disclosure.
FIG. 12 is a schematic structural diagram of a testing equipment according to an embodiment of the present disclosure.

### DETAILED DESCRIPTION

Hereinafter, the present disclosure will be described in further detail with reference to the accompanying drawings and embodiments.

In the related art, MDT data collection in an immediate mode relies on measurement results provided by both a wireless network and a terminal. Measurements of the terminal are derived from a radio resource control (RRC) measurement report. The wireless network can supplement these with data such as a power margin from a medium access control (MAC) layer report, received interference power (RIP) and data amount measured by the cell antennas at a physical wireless interface layer, Internet Protocol (IP) throughput, user plane packet delay report, and packet loss rate measured by the base station.

In a logged mode, the terminal stores information related to accessibility issues in an idle mode, RRC establishment failure, random access during handover, and wireless link failure (which may include connection loss, etc.). The MDT event log of the terminal (that is, the above-mentioned MDT measurement report, which may also be referred to as an MDT report) is sent to the network when requested. When a wireless connection is lost (i.e., a link drop occurs, meaning that a wireless link is disconnected), the terminal sends an MDT logged report (i.e., an MDT measurement report) after the next wireless connection is successfully established.

In the related art, the IDC mechanism introduced into the MDT for the logged mode includes: once an IDC problem is detected, the terminal suspends measurement report logging, and reports an IDC detection identifier (i.e., InDeviceCoexDetected-r17) through a measurement report (the identifier can also be understood as a mark or a flag). In other words, when a UE detects an IDC problem, the UE suspends measurement logging and tags MDT report with inDeviceCoexDetected-r17 flag in logMeasInfoList-r16 in VarLogMeasReport. Once the IDC problem is resolved, the terminal will resume the measurement logging. In other words, when the IDC problems detected by the UE are resolved during the last logging interval, the UE resumes measurement logging.

In the related art, in order to verify whether the MDT function of the terminal has an IDC mechanism that meets the relevant technical requirements, the defined test mechanism for the IDC problem includes: introducing 2.4 GHz Wireless Fidelity (Wi-Fi) as an interference source to interfere with the 2300~2400 MHz Band (i.e., Band n40) of the New Radio (NR), to construct an IDC condition, and then verifying whether the terminal will have a behavior of suspending logging and reporting the IDC detection identifier (i.e., InDeviceCoexDetected-r17) (which also can be expressed as a mark or a flag) through the measurement report, and whether the terminal will have a behavior of resuming the measurement logging after the IDC problem is resolved.

However, some well-designed terminals may have certain solutions to mitigate IDC problem, such as avoiding 2.4 GHz Wi-Fi operating at the same time as the Band n40 through software strategies; for another example, when a risk of interference is detected, the Wi-Fi is adjusted to a channel far away from an operating frequency of the cellular network, or the operating frequency of the cellular network is adjusted to a channel far away from the operating frequency of the Wi-Fi. Therefore, even if the test environment is configured with 2.4GHz WiFi and the 2300~2400 MHz Band (i.e., Band n40), the terminal may not necessarily have IDC problems. According to the test mechanism for IDC problem defined in the related art, if a well-designed terminal does not exhibit the expected state of suspending logging because there is no IDC problem, it will be misjudged as not correctly supporting the relevant functions of IDC problem. In other words, it may be impossible to accurately judge whether the terminal correctly supports the related function of the IDC problem using the test mechanism in the related art, that is, it may be impossible to accurately judge whether the MDT function of the terminal has an IDC mechanism that meets the relevant technical requirements.

Based on this, in various embodiments of the present disclosure, after executing an IDC problem test procedure on a terminal, in a case where the terminal does not pass the test, that is, in a case where a test result that the terminal passes the test is not obtained, it is confirmed whether the terminal detected an IDC problem in the IDC problem test procedure, and then a final test result for the terminal is generated according to the confirmation result. Alternatively, before executing the IDC problem test procedure on the terminal, it is first confirmed whether the terminal detected the IDC problem, and then executing the IDC problem test procedure on the terminal when it is confirmed that the terminal detected the IDC problem, or when it is confirmed that the terminal did not detect the IDC problem, first executing the IDC problem construction procedure on the terminal to construct an IDC problem, and then executing the IDC problem test procedure for the terminal. In this manner, it is possible to avoid misjudging that the terminal does not pass the test in a case where "the IDC problem does not occur due to the excellent design of the terminal (it can be understood that the terminal can support the IDC mechanism and can resolve the IDC problem) in the process of executing the IDC problem test procedure on the terminal. In other words, it is possible to avoid a problem in which a qualified terminal that can support the IDC mechanism is misjudged as an unqualified terminal that cannot support the IDC mechanism, and it is possible to accurately judge whether the terminal correctly supports the related function of the IDC problem, that is, it is possible to accurately judge whether the MDT function of the terminal has an IDC mechanism that meets the related technical requirements.

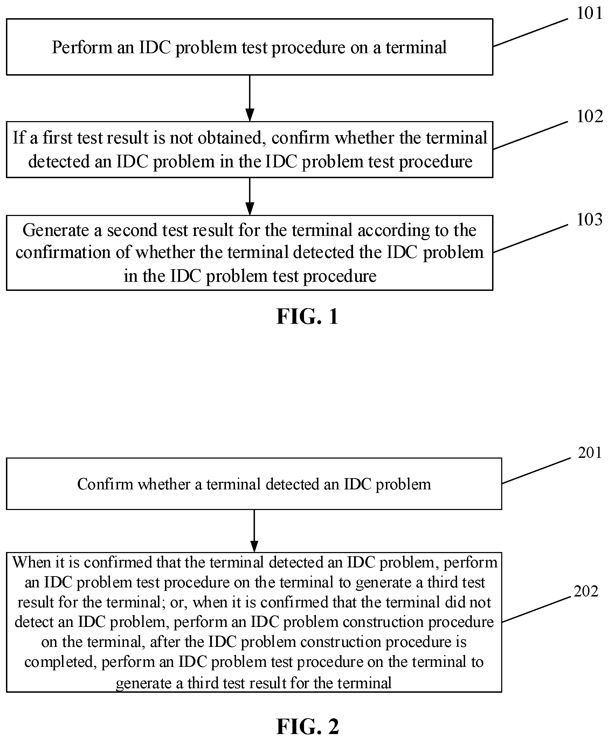

Specifically, an embodiment of the present disclosure provides a testing method applied to a testing equipment, as shown in FIG. 1, the method includes the following operations.

At 101: an IDC problem test procedure is performed on a terminal.

At 102: if a first test result is not obtained, whether the terminal detected an IDC problem in the IDC problem test procedure is confirmed.

At 103: a second test result for the terminal is generated according to the confirmation of whether the terminal detected the IDC problem in the IDC problem test procedure.

In practical application, the terminal may also be referred to as a UE or a device. The test equipment can also be referred to as an instrument, a test instrument, a test system, or a system simulator (SS), and the name of the test equipment is not limited in the embodiment of the present disclosure, as long as its function is realized. Additionally, it will be appreciated that the test equipment is capable of interacting information with the terminal.

In practical application, the first test result can be understood as a result expected or expected to be obtained through the IDC problem test procedure, that is, the first test result can indicate that the terminal has passed the IDC problem test or indicate that the IDC problem test is successful. The specific expression form of the first test result can be set according to requirements, and the embodiment of the present disclosure is not limited thereto. Exemplarily, the first test result may specifically include a conclusion (or a verdict) that the test has passed (i.e., pass, which is abbreviated as P).

Specifically, in the process of executing the IDC problem test procedure on the terminal, the test equipment may construct at least one test or pre-test condition that is expected or expected to enable the qualified terminal to detect an IDC problem, such as setting the test environment to 2.4 GHz WiFi and a 2300-2400 MHz frequency Band (i.e., Band n40) to cause the terminal to generate an IDC problem. Thereafter, the test equipment may acquire an MDT report from the terminal, and in a case where it is determined that the terminal has the following two behaviors simultaneously or only one of the following two behaviors according to the MDT report (i.e., in a case where it is determined that the terminal has the following behavior 1 and/or behavior 2 according to the MDT report), the test equipment may determine that the terminal passes the IDC problem test, i.e., obtaining the first test result:
Behavior 1, when UE detects IDC problem, UE suspend measurement logging and tag MDT report with inDeviceCoexDetected-r17 flag in logMeasInfoList-r16 in VarLogMeasReport.
Behavior 2, when the IDC problem detected by the UE is resolved during the last logging interval, the UE resumes measurement logging.

In practical application, in a case where it is determined that the terminal does not have the aforementioned behavior 1 and/or behavior 2 according to the MDT report, the test equipment may determine that the first test result is not obtained. At this time, the terminal may be an non-qualified terminal that cannot properly support the IDC mechanism (may also be referred to as an unqualified terminal), or may be a qualified terminal that does not have an IDC problem due to excellent design (it can be understood that the terminal can support the IDC mechanism and can mitigate the IDC problem). Therefore, the test equipment needs to confirm whether the terminal detected an IDC problem in the IDC problem test procedure.

In practical application, the test equipment can specifically adopt the following two ways to confirm whether the terminal detected an IDC problem in the IDC problem test procedure.

Manner 1: post-testing and post-verification of IDC problem. That is, after the IDC problem test procedure is executed on the terminal, at least one test condition identical to those for the IDC problem test procedure is reproduced, for each test condition, some specific indicators associated with the IDC problem are measured on the terminal, and whether the IDC problem is detected by the terminal in the IDC problem test procedure is confirmed based on the measurement result.

Manner 2: testing and then verifying the IDC problem. That is, in the process of executing the IDC problem test procedure on the terminal, for each of at least one constructed test condition, measuring some specific indicators associated with the IDC problem on the terminal first. After executing the IDC problem test procedure on the terminal, confirming whether the terminal detected an IDC problem in the IDC problem test procedure based on the measurement result.

Based on this, in an embodiment, for the above-described manner 1, the confirmation of whether the terminal detected an IDC problem in the IDC problem test procedure may include the following operations:
At least one test condition identical to that for the IDC problem test procedure is constructed;
For each of the at least one test condition, measurement of at least one index (also referred to as metric) associated with an IDC problem is performed on the terminal to obtain at least one measurement result of the terminal; and
whether the terminal detected an IDC problem in the IDC problem test procedure is confirmed based on the at least one measurement result.

In another embodiment, for the above-described Manner 2, the confirmation of whether the terminal detected an IDC problem in the IDC problem test procedure may include the following operations:
in the process of executing the IDC problem test procedure on the terminal, for each of at least one constructed test condition, measuring at least one index associated with the IDC problem on the terminal to obtain at least one measurement result of the terminal; and
based on the at least one measurement result, determining/confirming whether the terminal detected an IDC problem in the IDC problem test procedure.

In practical application, it can be understood that the at least one test condition is a preset condition that is expected or expected to enable the qualified terminal to detect an IDC problem, and each test condition can be understood as a network test environment virtualized by the testing equipment, or can be understood as a simulated network test state.

Specifically, at least one receiver and at least one transmitter are provided inside the terminal, an IDC problem may exist between one receiver (hereinafter referred to as a first receiver) and one transmitter (hereinafter referred to as a first transmitter), and the first transmitter is an interference source of the IDC problem. According to a test condition constructed by the testing equipment, an operating channel of the first receiver and an operating channel of the first transmitter can be passively (it can be understood to be configured) to assume a state corresponding to the test condition. The testing equipment may, in this state, measure at least one index associated with the IDC problem for the terminal, such as measuring a reference sensitivity and/or throughput of the first receiver, and confirming whether the terminal had detected an IDC problem in the IDC problem test procedure according to the obtained at least one measurement result.

Based on this, in an embodiment, the indices associated with the IDC problem may include at least one of the following:
a reference sensitivity of the first receiver of the terminal; or
a throughput of the first receiver of the terminal.

In practical application, the specific types of the first receiver and the first transmitter can be set according to test requirements, and the embodiment of the present disclosure is not limited thereto. Exemplarily, the type of the first receiver may include an NR receiver (i.e., a fifth generation mobile communication technology (5G) receiver), a long term evolution (LTE) receiver (i.e., a fourth generation mobile communication technology (4G) receiver), a sixth generation mobile communication technology (6G) receiver, a wireless local area network (WLAN) receiver, or the like. The first receiver may be either a cellular network receiver or a non-cellular network receiver. Correspondingly, the first transmitter may include a WLAN transmitter or a licensed assisted access (LAA) transmitter operating in a carrier/frequency band overlapping with or adjacent to the first receiver, or a cellular operating system transmitter such as an NR transmitter and/or an LTE transmitter operating in a carrier/frequency band overlapping with or adjacent to the first receiver. That is, the type of the first transmitter and the type of the first receiver may be the same or different. In addition, in a case where the first receiver includes an NR receiver, the throughput of the first receiver may be obtained based on a performance test of a synchronization block (SSB) or a channel state information reference signal (CSI-RS).

In practical application, regardless of the above manner 1 or the above manner 2, after at least one measurement result of the terminal is obtained, the testing equipment can confirm whether the terminal detected an IDC problem in the IDC problem test procedure according to whether the at least one measurement result meets a preset test requirement (hereinafter expressed as a first test requirement). In a case where the at least one measurement result does not satisfy the first test requirement, it may be determined that the terminal detected an IDC problem in the IDC problem test procedure; in a case where the at least one measurement result satisfies the first test requirement, it may be determined that the terminal did not detect an IDC problem in the IDC problem test procedure.

Based on this, in an embodiment, the operation of confirming whether the terminal detected an IDC problem in the IDC problem test procedure based on the at least one measurement result may include the following actions:
in the case that the at least one measurement result does not satisfy the first test requirement, it indicates (i.e., characterizes) that the terminal has detected an IDC problem in the IDC problem test procedure.

In another embodiment, the operation of confirming whether the terminal detected an IDC problem in the IDC problem test procedure based on the at least one measurement result may include:
in the case that the at least one measurement result satisfies the first test requirement, it indicates that the terminal has not detected an IDC problem in the IDC problem test procedure.

In practical application, the first test requirement may include a threshold corresponding to a specific index associated with an IDC problem, and the threshold may include the following two types:
type 1, an absolute value threshold (i.e., an absolute threshold); it should be noted that the absolute value is not an absolute value in a mathematical sense, but is used to represent the opposite meaning to the relative value, and refers to a value directly obtained by measurement under a test condition, and the value may be a positive number or a negative number; and
type 2, a relative value threshold (i.e., a relative threshold); it can be understood as a threshold for a change in a specific index obtained by measurement and calculation under at least two test conditions.

Based on this, in an embodiment, the indices associated with the first test requirement may include N indices, N being an integer greater than or equal to 1. Satisfying the first test requirement may include at least one of:
at least one of the N indices is better than or equal to a corresponding threshold; or,
a change in at least one of the N indices is better than or equal to a corresponding threshold.

In practical application, it can be understood that a number of indices associated with the IDC problem, a number of indices measured for the terminal, and a number of indices associated with the first test requirement may be the same or different. Exemplarily, assuming that a total number of indices associated with the IDC problem is 10, the testing equipment may measure 5 of the 10 indices for the terminal, and the first test requirement may be associated with 3 of the 10 indices, as long as one or multiple indices measured by the testing equipment for the terminal (here, a number of the multiple indices is not greater than a smaller value (i.e., 3) of the number of the indices measured for the terminal (i.e., 5) and the number of the indices associated with the first test requirement (i.e., 3)) can be better than or equal to a corresponding threshold, it may be determined that the first test requirement is satisfied; otherwise, it may be determined that the first test requirement is not satisfied.

In practical application, the actual concept of "better than" depends on whether the corresponding index value is positive or negative. For example, since a value of the reference sensitivity is a negative number, a higher value of the reference sensitivity indicates a poorer sensitivity. That is to say, the smaller the value of the reference sensitivity, the better. Therefore, the reference sensitivity being better than the corresponding threshold means that the reference sensitivity is less than the corresponding threshold. While, for the throughput, since the value of the throughput is a positive number, the larger the value of the throughput, the better, so the throughput being better than the corresponding threshold means that the throughput is greater than the corresponding threshold.

In practical application, as can be seen from the above description, in a case where the first test requirement includes an absolute value threshold (i.e., a threshold of type 1 described above), the testing equipment can measure at least one index associated with an IDC problem on the terminal under only one test condition, regardless of the above-described manner 1 or manner 2. Under the test condition, the testing equipment may configure an operating channel of the first receiver and an operating channel of the first transmitter of the terminal to be in a minimum spacing state.

Based on this, in an embodiment, for the above-described manner 1 and manner 2, in a case where the first test requirement includes an absolute value threshold (that is, the above-described threshold of type 1), the measurement of at least one index associated with the IDC problem for the terminal may include:
performing, for a first test condition, a measurement of at least one index associated with an IDC problem on the terminal, where, under the first test condition, an operating channel of a first receiver and an operating channel of a first transmitter of the terminal are configured to be in a minimum spacing state.

Accordingly, the satisfying the first test requirement may include at least one of the following:
a reference sensitivity of a first receiver of the terminal under a first test condition is better than (i.e., less than) or equal to a first threshold; or,
a throughput of the first receiver of the terminal under the first test condition is better than (i.e., greater than) or equal to a second threshold.

In practical application, as can be seen from the above description, in a case where the first test requirement includes a relative value threshold (that is, a threshold of type 2 described above), whether it is the above-described manner 1 or manner 2, the testing equipment needs to measure at least one index associated with an IDC problem on the terminal under at least two test conditions, respectively, to obtain a change in each index. Therefore, in order to improve the test efficiency, the testing equipment may configure the operating channel of the first receiver and the operating channel of the first transmitter of the terminal to be in a minimum spacing state and a maximum spacing state under two test conditions, respectively, and measure at least one index associated with the IDC problem for the terminal under both test conditions, respectively.

Based on this, in an embodiment, for the above-described manner 1 and manner 2, in a case where the first test requirement includes a relative value threshold (that is, a threshold of type 2 described above), the operation of measuring at least one index associated with an IDC problem for the terminal may include:
performing, for the first test condition and the second test condition, measurements of at least one index associated with an IDC problem on the terminal, respectively. Under the first test condition, an operating channel of a first receiver and an operating channel of a first transmitter of the terminal are configured to be in a minimum spacing state; under the second test condition, the operating channel of the first receiver and the operating channel of the first transmitter of the terminal are configured to be in a maximum spacing state.

Accordingly, the satisfying the first test requirement may include at least one of the following:
a reference sensitivity of a first receiver of the terminal under a first test condition is better than (i.e., less than) or equal to a first threshold;
a throughput of the first receiver of the terminal under the first test condition is better than (i.e., greater than) or equal to a second threshold;
a change in a reference sensitivity of the first receiver of the terminal under the first test condition and the second test condition is better than (i.e., less than) or equal to a third threshold; or,
a change in a throughput of the first receiver of the terminal under the first test condition and the second test condition is better than (i.e., less than) or equal to a fourth threshold.

In practical application, under the second test condition, in order to configure the operating channel of the first receiver and the operating channel of the first transmitter of the terminal to be in a maximum spacing state, the testing equipment may configure the first transmitter to be in an off state (i.e., is configured as being off). Specifically, the first transmitter being configured to be in an off state may include the following two situations:
case 1, powering off the first transmitter; and
case 2, causing the first transmitter to stop transmitting a signal.

In practical application, the specific values of the first threshold, the second threshold, the third threshold, and the fourth threshold may be set in advance according to test requirements. Alternatively, an association between different capability levels of the terminal and different values of a threshold (that is, a first threshold, a second threshold, a third threshold or a fourth threshold) may be set in advance, and the testing equipment may determine specific values of the threshold (that is, a first threshold, a second threshold, a third threshold, or a fourth threshold) based on the capability level of the terminal. Exemplarily, the association between different capability levels of the terminal and different values of the third threshold and/or the fourth threshold may be set in advance: the first capability level (default capability level) is associated with 3 decibels (dB) (i.e., the third threshold is 3 dB) and/or 50% (i.e., the fourth threshold is 50%), the second capability level is associated with 6 dB (i.e., the third threshold is 6 dB) and/or 75% (i.e., the fourth threshold is 75%), and the third capability level is associated with 1.5 dB (i.e., the third threshold is 1.5 dB) and/or 25% (i.e., the fourth threshold is 25%). The terminal can declare its own capability level to the testing equipment by reporting the identifier of the capability level or directly reporting the specific values of the third threshold and/or the fourth threshold according to its own implementation situation. The testing equipment may determine specific values of the third threshold and/or the fourth threshold according to the capability level declared by the terminal, as a basis for judging/determining whether the terminal detected an IDC problem in the IDC problem test procedure.

Based on this, in an embodiment, the method may further include that:
the third threshold and/or the fourth threshold are determined based on the capability level of the terminal, where different capability levels correspond to different third thresholds and/or fourth thresholds.

In practical application, after confirming whether the terminal detected an IDC problem in the IDC problem test procedure, a final test result (that is, the second test result) for the terminal may be generated according to the confirmation result.

Based on this, in an embodiment, the operation of generating a second test result for the terminal based on the confirmation of whether the terminal detected an IDC problem in the IDC problem test procedure may include:
in a case where the terminal detected an IDC problem in the IDC problem test procedure, the second test result indicates that the terminal does not pass the test;
in a case where the terminal did not detect an IDC problem in the IDC problem test procedure, the second test result indicates that the terminal passes the test.

In actual application, the specific expression form of the second test result can be set according to requirements, and the embodiment of the present disclosure is not limited thereto. Exemplarily, when the second test result indicates that the terminal does not pass a test, the second test result may specifically include a conclusion (i.e., a verdict) that the test has failed (abbreviated as F). When the second test result indicates that the terminal passes the test, the second test result may specifically include a conclusion that the test has passed (abbreviated as P).

In practical application, for example, it is assumed that a post-test and post-verification IDC problem (that is, the above-described manner 1) is adopted to confirm whether the terminal detected an IDC problem in the IDC problem test procedure, the first test requirement includes an absolute value threshold (that is, the above-described threshold of type 1), an index associated with the first test requirement includes a reference sensitivity of a first receiver of the terminal, the first receiver is an NR cell 1 receiver (hereinafter referred to as NR Cell 1), and the first transmitter is a WLAN access point 1 (cell 27) transmitter (hereinafter referred to as WLAN AP 1 (Cell 27)), test conditions constructed by a system simulator (that is, the testing equipment) in the process of executing the IDC problem test procedure on the terminal and test conditions constructed when confirming whether the terminal detected an IDC problem in the IDC problem test procedure are shown in Table 1, and the specific operations of the system simulator executing the IDC problem test procedure on the terminal and confirming whether the terminal detected an IDC problem in the IDC problem test procedure are shown in Table 2. In Table 1, "T0" represents an initial test condition; "T1" and "T2" represent two test conditions respectively built by the system simulator during execution of the IDC problem test procedure; "T3" indicates the same test condition as "T1" that the system simulator reproduces (i.e., reconstructs) when confirming whether the terminal detected an IDC problem in the IDC problem test procedure, i.e., "T3" is equivalent to the first test condition. In Table 2, the IDC question test procedure specifically includes operations 1 to 22, and the conclusion (which can be expressed as Verdict) P obtained in operation 22 is the first test result; and the system simulator confirms whether the terminal detected an IDC problem in the IDC problem test procedure includes operations 23 to 24.

**Table 1**

| | Parameter | Unit | NR Cell 1 | WLAN AP 1 (Cell 27) | Remark |
|---|---|---|---|---|---|
| T0 | Synchronization signal (SS) /physical broadcast channel (PBCH) secondary synchronization signal (SSS) energy per resource element (EPRE) | Milliwatt decibel (dBm) /subcarrier spacing (SCS) | -88 | | WLAN AP 1 (Cell 27) is configured as being off; |
| | | | | | NR Cell 1 is configured as close to 2400MHz as possible |
| | Beacon Received Signal Strength Indication (BeaconRSSI) | dBm | | Off | |
| T1 | SS/PBCH SSS EPRE | dBm/SCS | -88 | | Channel 1 (2401-2423 MHz) is configured to WLAN AP 1 (Cell 27); NR Cell 1 is configured as close to 2400MHz as possible |
| | BeaconRSSI | dBm | | -80 | |
| T2 | SS/PBCH SSS EPRE | dBm/SCS | -88 | | WLAN AP 1 (Cell 27) is configured as being off; |
| | BeaconRSSI | dBm | | Off | |
| | | | | | NR Cell 1 is configured as close to 2400MHz as possible |
| T3 (i.e., first test condition ) | SS/PBCH SSS EPRE | dBm/SCS | -88 | | Channel 1 (2401-2423 MHz) is configured to WLAN AP 1 (Cell 27); NR Cell 1 is configured as close to 2400MHz as possible |
| | BeaconRSSI | dBm | | -80 | |

**Table 2**

| St (Steps ) | Procedure | Message Sequence | | TP (Test Purpose) Verdict | |
|---|---|---|---|---|---|
| | | Terminal-System Simulator (U-S) | Message | | |
| 1 | The SS transmits a LoggedMeasurementCon figuration message on NR Cell 1 | <- - (represents that the system simulator sends a message to UE) | NR RRC: LoggedMeasurem entConfiguration | - | - |
| 2 | The SS transmits an RRCRelease message to release the RRC connection | <-- | NR RRC: RRC release | - - | |
| 3 | Wait 10s to allow UE to activate logging | - | - | - | - |
| 3a | The SS re-adjusts the SS/PBCH EPRE level according to row "T1" in Table 1 | - | - | - | - |
| 4 | Void | - | - | - | - |
| 4a | The SS re-adjusts the SS/PBCH EPRE level according to row "T2" in Table 1 after 10s | - | - | - | - |
| 5 | Wait 10s to allow UE to resume logging | - | - | - | - |
| 6~20 | Steps 1 to 15 of the generic procedure for NR RRC_IDLE specified in TS 38.508-1 subclause 4.5.2 are performed | - | - | - | - |
| 21 | The SS transmits an UEInformationRequest message to get logMeasReport | <-- | NR RRC: as UEInformationRequest | - | - |
| 22 | Check: Does the UE transmit an UEInformationResponse message including logMeasReport with a LogMeasInfoList consisting of at least three LogMeasInfo entries, and one of the LogMeasInfo entries, except the first one and the last one, is tagged with inDeviceCoexDetected-r 17, and also there exists at least 10s gap between the relativeTimeStamp of the LogMeasInfoList entry with inDeviceCoexDetected-r 17 flag and the relativeTimeStamp of the next LogMeasInfoList entry without inDeviceCoexDetected-r 17 flag? | --> (represents that UE sends a message to the system simulator) | NR RRC: UEInformationRe spons | behavior 1 and behavior 2 | P (i.e., the first test result) |
| | Note 1: The relativeTimeStamp is increased between the subsequent LogMeasInfoList entries) | | | | |
| | Note 2: At least 10s gap between the relativeTimeStamp of the LogMeasInfoList entry with inDeviceCoexDetected-r 17 flag and the relativeTimeStamp of the next LogMeasInfoList entry without inDeviceCoexDetected-r 17 flag is used to check that the UE suspends measurement logging when IDC problem is detected.) | | | | |
| 23 | The SS re-adjusts the SS/PBCH EPRE level according to row "T3" in Table 1) (i.e., constructing the first test condition) | - | - | - | - |
| 24 | Check: Does Reference Sensitivity of NR Cell 1 with "T3" configuration meet the test requirements)? | - | - | behavior 1 and behavior 2 | P (i.e., the second test result indicate s that the termina l passes the test) |
| | Note 1: Test procedures and test requirements for Reference Sensitivity are specified in cl. 7.3 of TS 38.521-1[45] | | | | |
| | Note 2: To confirm whether UE detected IDC problems. If Reference Sensitivity of NR Cell 1 with "T3" configuration meets the test requirements, UE didn't detect IDC problem. If Reference Sensitivity of NR Cell 1 with "T3" configuration does NOT meet the test requirement, UE detected IDC problem) | | | | |

In practical application, for example, it is assumed that a post-test and post-verification IDC problem (that is, the above-described manner 1) is adopted to confirm whether the terminal detected an IDC problem in the IDC problem test procedure, the first test requirement includes a relative value threshold (that is, the above-described threshold of type 2), an index associated with the first test requirement includes a reference sensitivity of a first receiver of the terminal, the first receiver is an NR Cell 1 receiver (hereinafter referred to as NR Cell 1), and the first transmitter is a WLAN AP 1 (Cell 27) transmitter (hereinafter referred to as WLAN AP 1 (Cell 27)), test conditions constructed by the system simulator (that is, the testing equipment) in the process of executing the IDC problem test procedure on the terminal and test conditions constructed when confirming whether the terminal detected an IDC problem in the IDC problem test procedure are shown in Table 3, and the specific steps of the system simulator executing the IDC problem test procedure on the terminal and confirming whether the terminal detected an IDC problem in the IDC problem test procedure are shown in Table 4. In Table 3, "T0" denotes an initial test condition; "T1" and "T2" denote two test conditions respectively built by the system simulator during execution of the IDC problem test procedure, "T2" is equivalent to the second test condition; "T3" represents a same test condition as "T1" that the system simulator reproduces (i.e., reconstructs) when confirming whether the terminal detected an IDC problem in the IDC problem test procedure, i.e., "T3" is equivalent to the first test condition. In Table 4, the IDC problem test procedure specifically includes steps 1 to 22, and the conclusion (i.e., Verdict) P obtained in step 22 is the first test result. The operation that the system simulator confirms whether the terminal detected an IDC problem in the IDC problem test procedure includes steps 23 to 26.

**Table 3**

| | Parameter | Unit | NR Cell 1 | WLAN AP 1 (Cell 27) | Remark |
|---|---|---|---|---|---|
| T0 | SS/PBCH | dBm/SCS | -88 | | WLAN AP 1 (Cell 27) is configured as being off; |
| | SSS EPRE | | | | |
| | BeaconRSSI | dBm | | Off | |
| | | | | | NR Cell 1 is configured as close to 2400MHz as possible. |
| T1 | SS/PBCH | dBm/SCS | -88 | | Channel 1 (2401~2423MHz) is configured to WLAN AP 1 (Cell 27); |
| | SSS EPRE | | | | |
| | BeaconRSSI | dBm | | -80 | |
| | | | | | NR Cell 1 is configured as close to 2400MHz as possible. |
| T2 (i.e., the second test condition ) | SS/PBCH | dBm/SCS | -88 | | WLAN AP 1 (Cell 27) is configured as being off; |
| | SSS EPRE | | | | |
| | BeaconRSSI | dBm | | Off | |
| | | | | | NR Cell 1 is configured as close to 2400MHz as possible. |
| T3 (i.e., the first test condition ) | SS/PBCH | dBm/SCS | -88 | | Channel 1 (2401-2423 MHz) is configured to WLAN AP 1 (Cell 27); NR Cell 1 is configured as close to 2400MHz as possible. |
| | SSS EPRE | | | | |
| | BeaconRSSI | dBm | | -80 | |

**Table 4**

| St | Procedure | Message Sequence | | TP | Verdict |
|---|---|---|---|---|---|
| | | U-S | Message | | |
| 1 | The SS transmits a LoggedMeasurementConfig uration message on NR Cell 1 | <-(represents that a system simulator sends a message to UE) | NR RRC: LoggedMeasureme ntConfiguration | - | - |
| 2 | The SS transmits a RRCRelease message to release the RRC connection | <-- | NR RRC: RRCRelease | - - | |
| 3 | Wait 10s to allow UE to activate logging | - | - | - | - |
| 3a | The SS re-adjusts the SS/PBCH EPRE level according to row "T1" in Table 3 | - | - | - | - |
| 4 | Void | - | - | - | - |
| 4a | The SS re-adjusts the SS/PBCH EPRE level according to row "T2" in Table 3 after 10s | - | - | - | - |
| 5 | Wait 10s to allow UE to resume logging | - | - | - | - |
| 6~ 20 | Steps 1 to 15 of the generic procedure for NR RRC_IDLE specified in TS 38.508-1 subclause 4.5.2 are performed | - | - | - | - |
| 21 | The SS transmits an UEInformationRequest message to get logMeasReport | <-- | NR RRC: UEInformationReq uest | - | - |
| 22 | Check: Does the UE transmit an UEInformationResponse message including logMeasReport with a LogMeasInfoList consisting of at least three LogMeasInfo entries, and one of the LogMeasInfo entries, except the first one and the last one, is tagged with inDeviceCoexDetected-r17, and also there exists at least 10s gap between the relativeTimeStamp of the LogMeasInfoList entry with inDeviceCoexDetected-r17 flag and the relativeTimeStamp of the next LogMeasInfoList entry without inDeviceCoexDetected-r17 flag)? | --> (represents that UE sends a message to the system simulator) | NR RRC: UEInformationRes pons | behavior 1 and behavior 2 | P(i.e., the first test result) |
| | Note 1: The relativeTimeStamp is increased between the subsequent LogMeasInfoList entries | | | | |
| | Note 2: At least 10s gap between the relativeTimeStamp of the LogMeasInfoList entry with inDeviceCoexDetected-r17 flag and the relativeTimeStamp of the next LogMeasInfoList entry without inDeviceCoexDetected-r17 flag is used to check that the UE suspends measurement logging when IDC problem is detected. | | | | |
| 23 | Test Reference Sensitivity of NR Cell 1 with "T2" configuration in Table 3 Test procedures for Reference Sensitivity are specified in cl. 7.3 of TS 38.521-1[45] | - | - | - | - |
| 24 | The SS re-adjusts the SS/PBCH EPRE level according to row "T3" in Table 3 | - | - | - | - |
| 25 | Test Reference Sensitivity of NR Cell 1 with "T3" configuration in Table 3 Test procedures for Reference Sensitivity are specified in cl. 7.3 of TS 38.521-1[45] | - | - | - | - |
| | Check: Does Reference Sensitivity of NR Cell 1 with "T3" configuration is at most XdB higher than "T2" configuration in Table 3? | | | behavior 1 and behavior 2 | P (i.e., the second test result indicate s that UE passes the test) |
| | Note 1: XdB can be 3dB as default if not declared by the UE | | | | |
| 26 | Note 2: To confirm whether UE detected IDC problems. If Reference Sensitivity of NR Cell 1 with "T3" configuration meets the test requirements of being at most XdB higher than "T2" configuration, UE didn't detect IDC problem. If Reference Sensitivity of NR Cell 1 with "T3" configuration does NOT meet the test requirement of being at most XdB higher than "T2" configuration, UE detected IDC problem | - | - | | |

In practical application, for example, it is assumed that a manner of first testing and then verifying an IDC problem (that is, the above-described manner 2) is adopted to confirm whether the terminal detected an IDC problem in the IDC problem test procedure, the first test requirement includes an absolute value threshold (that is, the above-described threshold of type 1), an index associated with the first test requirement includes a reference sensitivity of a first receiver of the terminal, the first receiver is an NR Cell 1 receiver (hereinafter referred to as NR Cell 1), and the first transmitter is a WLAN AP 1 (Cell 27) transmitter (hereinafter referred to as WLAN AP 1 (Cell 27)), test conditions constructed by the system simulator (that is, the testing equipment) in the process of executing the IDC problem test procedure on the terminal and test conditions constructed when confirming whether the terminal detected an IDC problem in the IDC problem test procedure are shown in Table 5, and the specific steps of the system simulator executing the IDC problem test procedure on the terminal and confirming whether the terminal detected an IDC problem in the IDC problem test procedure are shown in Table 6. In Table 5, "T0" denotes an initial test condition; "T1" and "T2" denote two test conditions respectively constructed by the system simulator during execution of the IDC problem test procedure, and "T1" is equivalent to the first test condition. In Table 6, the IDC problem test procedure specifically includes steps 1 to 3, steps 3a to 4, and steps 4a to 22, and the conclusion (i.e., Verdict) P obtained in step 22 is the first test result. The operation that the system simulator confirms whether the terminal detected an IDC problem in the IDC problem test procedure includes a step 3aa, a step 4aa, and a step 23.

**Table 5**

| | Parameter | Unit | NR Cell 1 | WLAN AP 1 (Cell 27) | Remark |
|---|---|---|---|---|---|
| T0 | SS/PBCH SSS EPRE | dBm/SCS | -88 | | WLAN AP 1 (Cell 27) is configured as being off; |
| | BeaconRSSI | dBm | | Off | |
| | | | | | NR Cell 1 is configured as close to 2400MHz as possible. |
| T1 (i.e., the first test condit ion) | SS/PBCH SSS EPRE | dBm/SCS | -88 | | Channel 1 (2401~2423MHz) is configured to WLAN AP 1 (Cell 27); |
| | BeaconRSSI | dBm | | -80 | |
| | | | | | NR Cell 1 is configured as close to 2400MHz as possible. |
| T2 | SS/PBCH SSS EPRE | dBm/SCS | -88 | | WLAN AP 1 (Cell 27) is configured as being off; |
| | BeaconRSSI | dBm | | Off | NR Cell 1 is configured as close to 2400MHz as possible. |

**Table 6**

| St | Procedure | Message Sequence | | TP | Verdict |
|---|---|---|---|---|---|
| | | U-S | Message | | |
| 1 | The SS transmits a LoggedMeasurementCon figuration message on NR Cell 1 | <-(represents that a system simulator sends a message to UE) | NR RRC: LoggedMeasurementC onfiguration | - | - |
| 2 | The SS transmits a RRCRelease message to release the RRC connection | <-- | NR RRC:RRCRelease | - | - |
| 3 | Wait 10s to allow UE to activate logging | - | - | - | - |
| 3aa | Check the Reference Sensitivity of NR Cell 1 with "T0" configuration in Table 5 | - | - | - | - |
| | Test procedures for Reference Sensitivity are specified in cl. 7.3 of TS 38.521-1[45] | | | | |
| 3a | The SS re-adjusts the SS/PBCH EPRE level according to row "T1" in Table 5 | - | - | - | - |
| 4 | Void | - | - | - | - |
| 4aa | Test Reference Sensitivity of NR Cell 1 with "T1" configuration in Table 5 | - | - | - | - |
| | Test procedures for Reference Sensitivity are specified in cl. 7.3 of TS 38.521-1[45] | | | | |
| 4a | The SS re-adjusts the SS/PBCH EPRE level according to row "T2" in Table 5 after 10s | - | - | - | - |
| 5 | Wait 10s to allow UE to resume logging | - | - | - | - |
| 6~ 20 | Steps 1 to 15 of the generic procedure for NR RRC_IDLE specified in TS 38.508-1 subclause 4.5.2 are performed | - | - | - | - |
| 21 | The SS transmits an UEInformationRequest message to get logMeasReport | <-- | NR RRC: UEInformationReques t | - | - |
| 22 | Check: Does the UE transmit an UEInformationResponse message including logMeasReport with a LogMeasInfoList | --> (represents that UE sends a message to the system simulator) | NR RRC: UEInformationRespon s | behav ior 1 and behav ior 2 | P (i.e., the first test result) |
| | Note 1: The relativeTimeStamp is increased between the subsequent LogMeasInfoList entries | | | | |
| | Note 2: At least 10s gap between the relativeTimeStamp of the LogMeasInfoList entry with inDeviceCoexDetected-r 17 flag and the relativeTimeStamp of the next LogMeasInfoList entry without inDeviceCoexDetected-r 17 flag is used to check that the UE suspends measurement logging when IDC problem is detected. | | | | |
| 23 | Check: Does Reference Sensitivity of NR Cell 1 with "T1" configuration in step 4aa meet the test requirements? | - | - | behav ior 1 and behav ior 2 | P (i.e., the second test result indicates that the UE passes the test) |
| | Note: To confirm whether UE detected IDC problems. If Reference Sensitivity of NR Cell 1 with "T1" configuration meets the test requirements, UE didn't detect IDC problem. If Reference Sensitivity of NR Cell 1 with "T1" configuration does NOT meet the test requirement, UE detected IDC problem | | | | |

In practical application, for example, it is assumed that a manner of first testing and then verifying an IDC problem (that is, the above-described manner 2) is adopted to confirm whether the terminal detected an IDC problem in the IDC problem test procedure, the first test requirement includes a relative value threshold (that is, the above-described threshold of type 2), an index associated with the first test requirement includes a reference sensitivity of a first receiver of the terminal, the first receiver is an NR Cell 1 receiver (hereinafter referred to as NR Cell 1), and the first transmitter is a WLAN AP 1 (Cell 27) transmitter (hereinafter referred to as WLAN AP 1 (Cell 27)), test conditions constructed by the system simulator (that is, the testing equipment) in the process of executing the IDC problem test procedure on the terminal and test conditions constructed when confirming whether the terminal detected an IDC problem in the IDC problem test procedure are shown in Table 7, and the specific steps of the system simulator executing the IDC problem test procedure on the terminal and confirming whether the terminal detected an IDC problem in the IDC problem test procedure are shown in Table 8. In Table 7, "T0" denotes an initial test condition, which also corresponds to the second test condition; "T1" and "T2" denote two test conditions respectively constructed by the system simulator during execution of the IDC problem test procedure, and "T1" corresponds to the first test condition. In Table 8, the IDC problem test procedure specifically includes steps 1 to 3, steps 3a to 4, and steps 4a to 22, and the conclusion (i.e., Verdict) P obtained in step 22 is the first test result. The operation that the system simulator confirms whether the terminal detected an IDC problem in the IDC problem test procedure includes a step 3aa, a step 4aa, and a step 23.

**Table 7**

| | Parameter | Unit | NR Cell 1 | WLAN AP 1 (Cell 27) | Remark |
|---|---|---|---|---|---|
| T0 (i.e., the second test condition) | SS/PBCH | dBm/SCS | -88 | | WLAN AP 1 (Cell 27) is configured as being off; |
| | SSS EPRE | | | | |
| | BeaconRSSI | dBm | | Off | |
| | | | | | NR Cell 1 is configured as close to 2400MHz as possible. |
| T1 (i.e., the first test condition) | SS/PBCH | dBm/SCS | -88 | | Channel 1 (2401~2423MHz) is configured to WLAN AP 1 (Cell 27); |
| | SSS EPRE | | | | |
| | BeaconRSSI | dBm | | -80 | |
| | | | | | NR Cell 1 is configured as close to 2400MHz as possible. |
| T2 | SS/PBCH | dBm/SCS | -88 | | WLAN AP 1 (Cell 27) is configured as being off; |
| | SSS EPRE | | | | |
| | BeaconRSSI | dBm | | Off | |
| | | | | | NR Cell 1 is configured as close to 2400MHz as possible. |

**Table 8**

| St | Procedure | Message Sequence | | TP | Verdict |
|---|---|---|---|---|---|
| | | U-S | Message | | |
| 1 | The SS transmits a LoggedMeasurementCon figuration message on NR Cell 1 | <-(represents that the system simulator sends a message to UE) | NR RRC: LoggedMeasurementCo nfiguration | - | - |
| 2 | The SS transmits a RRCRelease message to release the RRC connection | <-- | NR RRC: RRCRelease | - | - |
| 3 | Wait 10s to allow UE to activate logging | - | - | - | - |
| 3aa | Test the Reference Sensitivity of NR Cell 1 with "T0" configuration in Table 7 | - | - | - | - |
| | Test procedures for Reference Sensitivity are specified in cl. 7.3 of TS 38.521-1[45] | | | | |
| 3a | The SS re-adjusts the SS/PBCH EPRE level according to row "T1" in Table 7 | - | - | - | - |
| 4 | Void | - | - | - | - |
| 4aa | Test Reference Sensitivity of NR Cell 1 with "T1" configuration in Table 7 | - | - | - | - |
| | Test procedures for Reference Sensitivity are specified in cl. 7.3 of TS 38.521-1[45] | | | | |
| 4a | The SS re-adjusts the SS/PBCH EPRE level according to row "T2" in Table 7 after 10s | - | - | - | - |
| 5 | Wait 10s to allow UE to resume logging | - | - | - | - |
| 6~ 20 | Steps 1 to 15 of the generic procedure for NR RRC_IDLE specified in TS 38.508-1 subclause 4.5.2 are performed | - | - | - | - |
| 21 | The SS transmits an UEInformationRequest message to get logMeasReport | <-- | NR RRC: UEInformationRequest | - | - |
| 22 | Check: Does the UE transmit an UEInformationResponse message including logMeasReport with a LogMeasInfoList consisting of at least three LogMeasInfo entries, and one of the LogMeasInfo entries, except the first one and the last one, is tagged with inDeviceCoexDetected-r 17, and also there exists at least 10s gap between the relativeTimeStamp of the LogMeasInfoList entry with inDeviceCoexDetected-r 17 flag and the relativeTimeStamp of the next LogMeasInfoList entry without inDeviceCoexDetected-r 17 flag? | --> (represents that UE sends a message to the system simulator) | NR RRC: UEInformationRespons | behavior 1 and behav ior 2 | P (i.e., the first test result) |
| | Note 1: The relativeTimeStamp is increased between the subsequent LogMeasInfoList entries | | | | |
| | Note 2: At least 10s gap between the relativeTimeStamp of the LogMeasInfoList entry with inDeviceCoexDetected-r 17 flag and the relativeTimeStamp of the next LogMeasInfoList entry without inDeviceCoexDetected-r 17 flag is used to check that the UE suspends measurement logging when IDC problem is detected. | | | | |
| 23 | Check: Does Reference Sensitivity of NR Cell 1 with "T1" configuration in step 4aa is at most XdB higher than "T0" configuration in step 3aa? | - | - | behavior 1 and behavior 2 | P (i.e., the second test result indicates that UE passes the test) |
| | Note 1: XdB can be 3dB as default if not declared by the UE | | | | |
| | Note 2: To confirm whether UE detected IDC problems. If Reference Sensitivity of NR Cell 1 with "T1" configuration meets the test requirements of being at most XdB higher than "T0" configuration, UE didn't detect IDC problem. If Reference Sensitivity of NR Cell 1 with "T1" configuration does NOT meet the test requirement of being at most XdB higher than "T0" configuration, UE detected IDC problem | | | | |

An embodiment of the present disclosure also provides a testing method, which is applied to a testing equipment, as shown in FIG. 2, the method includes the following operations.

At 201: whether a terminal detected an IDC problem is confirmed.

At 202: when it is confirmed that the terminal detected an IDC problem, an IDC problem test procedure is performed on the terminal to generate a third test result for the terminal; alternatively, when it is confirmed that the terminal did not detect an IDC problem, an IDC problem construction procedure is performed on the terminal, after the IDC problem construction procedure is completed, the IDC problem test procedure is executed on the terminal to generate a third test result for the terminal.

In practical application, the operation 201 can be understood as an IDC problem confirmation procedure set before the IDC problem test procedure, that is, before testing whether the above-mentioned behavior 1 occurs in the terminal, the testing equipment confirms whether the terminal detected an IDC problem; when it is confirmed that the terminal detected the IDC problem, an IDC problem test procedure is executed on the terminal.

In practical application, in order to confirm whether the IDC problem is detected by the terminal, the testing equipment may construct at least one test condition (which may be expressed as test conditions or pre-test conditions) that is intended or expected to be capable of causing the IDC problem to be detected by the qualified terminal. For each test condition, the testing equipment may perform measurements of some specific indices associated with the IDC problem on the terminal, and use the measurement results to confirm whether the terminal detected the IDC problem.

Based on this, in an embodiment, the operation of confirming whether the terminal detected an IDC problem may include:
constructing at least one test condition;
for each of the at least one test condition, measuring at least one index associated with an IDC problem on the terminal to obtain at least one measurement result of the terminal; and
confirming whether the terminal detected an IDC problem based on the at least one measurement result.

In practical application, it can be understood that the at least one test condition is a preset condition that is expected or anticipated to enable the qualified terminal to detect an IDC problem, and each of the at least one test condition can be understood as a network test environment virtualized by the testing equipment, or can be understood as a simulated network test state.

Specifically, at least one receiver and at least one transmitter are provided inside the terminal, an IDC problem may exist between one receiver (hereinafter referred to as a second receiver) and one transmitter (hereinafter referred to as a second transmitter), and the second transmitter is an interference source of the IDC problem. According to a test condition constructed by the testing equipment, an operating channel of the second receiver and an operating channel of the second transmitter can be passively (it can be understood to be configured) to assume a state corresponding to the test condition. The testing equipment may, in this state, measure at least one index associated with the IDC problem for the terminal, such as measuring a reference sensitivity and/or a throughput of the second receiver, and confirming whether the terminal detected an IDC problem according to the obtained at least one measurement result.

Based on this, in an embodiment, the indices associated with the IDC problem may include at least one of the following:
a reference sensitivity of the second receiver of the terminal; or,
a throughput of the second receiver of the terminal.

In practical application, the specific types of the second receiver and the second transmitter can be set according to test requirements, the specific type of the second receiver can be the same as or different from the specific type of the first receiver, and the specific type of the second transmitter can be the same as or different from the specific type of the first transmitter, which is not limited in the embodiment of the present disclosure. Exemplarily, the type of the second receiver may include an NR receiver (i.e., a 5G receiver), an LTE receiver (i.e., a 4G receiver), a 6G receiver, a WLAN receiver, or the like. The second receiver may be either a receiver of a cellular network or a receiver of a non-cellular network. Correspondingly, the second transmitter may include a WLAN transmitter or a LAA transmitter operating in a carrier/frequency band overlapping with or adjacent to that of the second receiver, or a transmitter of a cellular operating system such as other NR transmitters and/or LTE transmitters operating in a carrier/frequency band overlapping with or adjacent to that of the second receiver, that is, the type of the second transmitter and the type of the second receiver may be the same as or different from each other. In addition, in a case where the second receiver includes an NR receiver, a throughput of the second receiver may be obtained based on a performance test of SSB or CSI-RS.

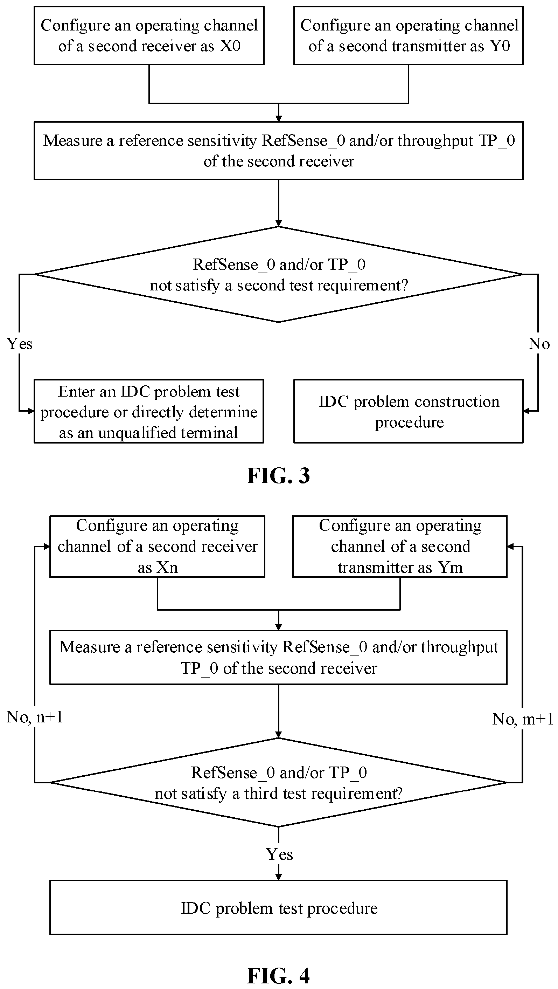

In practical application, after obtaining at least one measurement result from the terminal, the testing equipment can confirm whether the terminal detected an IDC problem according to whether the at least one measurement result meets a preset test requirement (hereinafter expressed as a second test requirement). Exemplarily, a flow for confirming whether a terminal detected an IDC problem may be shown in FIG. 3. The testing equipment may configure an operating channel of the second receiver as X0 (the channel X0 is a channel farthest from the operating frequency band of the second transmitter) and configure an operating channel of the second transmitter as Y0 (the channel Y0 is a channel farthest from the operating frequency band of the second receiver), thereby constructing a third test condition in which the operating channel of the second receiver and the operating channel of the second transmitter are configured to be in a maximum spacing state. In order to further configure an operating channel of the second receiver and an operating channel of the second transmitter to be in a maximum spacing state, the second transmitter may be configured by the testing equipment as being off according to a test requirement. The second transmitter being configured as being off may include two situations: case 1, powering off the second transmitter; Case 2, causing the second transmitter to stop transmitting a signal.

As shown in FIG. 3, under the third test condition, the testing equipment may measure the reference sensitivity and/or throughput of the second receiver and determine whether the reference sensitivity and/or throughput of the second receiver satisfy the second test requirement. When the reference sensitivity and/or throughput of the second receiver does not meet the second test requirement, if the interference source (i.e., the second transmitter) is in an off state (i.e., the second transmitter is configured as being off under the third test condition), the testing equipment considers (which may be understood as directly determining) the terminal as an unqualified terminal, i.e., the testing equipment may directly generate a fourth test result for the terminal, the fourth test result indicating that the terminal does not pass the test. If the second transmitter is in an unturned-off state (i.e., the second transmitter is configured to be in an unturned-off state under the third test condition), the testing equipment may turn off the second transmitter, and confirm again whether the reference sensitivity and/or throughput of the second receiver meets the second test requirement. If the reference sensitivity and/or throughput of the second receiver satisfies the second test requirement after the second transmitter is turned off, the testing equipment can confirm that the terminal detected an IDC problem, and after the second transmitter is turned on again, the terminal can enter into an IDC problem test procedure, that is, the testing equipment can perform an IDC problem test procedure on the terminal. If, after turning off the second transmitter, the reference sensitivity and/or throughput of the second receiver still does not meet the second test requirement, the testing equipment considers the terminal to be an unqualified terminal, i.e., the testing equipment may directly generate a fourth test result for the terminal, the fourth test result indicating that the terminal does not pass the test. When the reference sensitivity and/or throughput of the second receiver satisfies the second test requirement, the testing equipment can determine that the terminal has not detected an IDC problem regardless of whether the second transmitter is in an off state, and can make the terminal enter into an IDC problem construction procedure, that is, the testing equipment can execute an IDC problem construction procedure on the terminal, and then execute an IDC problem test procedure on the terminal after the IDC problem construction procedure is completed.

Based on this, in an embodiment, the operation of confirming whether the terminal detected an IDC problem based on the at least one measurement result may include:
in a case where the at least one measurement result satisfies a second test requirement, it is confirmed that the terminal did not detect an IDC problem; or,
in a case where the at least one measurement result does not satisfy the second test requirement when the second transmitter of the terminal is configured as being in an unturned-off state, and in a case where the at least one measurement result satisfies the second test requirement when the second transmitter of the terminal is configured as being in an off state, it is confirmed that the terminal detected an IDC problem.

In another embodiment, the method may further include:
generating, for the terminal, a fourth test result indicating that the terminal does not pass the test in one of the following cases:
in a case where the at least one measurement result does not satisfy a second test requirement when a second transmitter of the terminal is configured to be in an off state; or,
in a case where the at least one measurement result does not satisfy the second test requirement when the second transmitter of the terminal is configured to be in an unturned-off state, and the at least one measurement result also does not satisfy the second test requirement when the second transmitter of the terminal is configured to be in an off state.

In actual application, the specific expression form of the fourth test result can be set according to requirements. Exemplarily, the fourth test result may specifically include a conclusion (i.e., Verdict) that the test failed (abbreviated as F).

In practical application, the second test requirement may also include an absolute value threshold (i.e., the above-mentioned threshold of type 1) and/or a relative value threshold (i.e., the above-mentioned threshold of type 2).

Based on this, in an embodiment, the indices associated with the second test requirement may include N indices, N being an integer greater than or equal to 1. Satisfying the second test requirement may include at least one of the following:
at least one of the N indices is better than or equal to a corresponding threshold; or,
a change of at least one of the N indices is better than or equal to a corresponding threshold.

In practical application, it can be understood that in a case where the second test requirement includes a relative value threshold, in a process of confirming whether the terminal detected an IDC problem, the testing equipment needs to measure at least one index associated with the IDC problem for the terminal under at least two test conditions, respectively, to obtain a change of each index.

Based on this, in an embodiment, the satisfying the second test requirement may include at least one of the following:
a reference sensitivity of a second receiver of the terminal under a third test condition is better than (i.e., less than) or equal to a fifth threshold;
a throughput of the second receiver of the terminal under the third test condition is better than (i.e., greater than) or equal to a sixth threshold;
a change in a reference sensitivity of the second receiver of the terminal under the third test condition and the fourth test condition is better than (i.e., less than) or equal to a seventh threshold; or,
a change in a throughput of the second receiver of the terminal under the third test condition and the fourth test condition is better than (i.e., less than) or equal to an eighth threshold;
where under the third test condition, an operating channel of a second receiver and an operating channel of a second transmitter of the terminal are configured to be in a maximum spacing state; and
under the fourth test condition, the operating channel of the second receiver and the operating channel of the second transmitter of the terminal are configured to be in a minimum spacing state.

In practical application, specific values of the fifth threshold, the sixth threshold, the seventh threshold, and the eighth threshold may be set in advance according to test requirements. Alternatively, an association between different capability levels of the terminal and different values of a threshold value (i.e., a fifth threshold, a sixth threshold, a seventh threshold, and/or an eighth threshold) may be set in advance, and the testing equipment may determine specific values of a threshold (i.e., a fifth threshold, a sixth threshold, a seventh threshold, and/or an eighth threshold) based on the capability levels of the terminal. For example, the association between different capability levels of the terminal and different values of the seventh threshold and/or the eighth threshold may be set in advance: a first capability level (default capability level) is associated with 3 dB (i.e., the seventh threshold is 3 dB) and/or 50% (i.e., the eighth threshold is 50%), a second capability level is associated with 6 dB (i.e., the seventh threshold is 6 dB) and/or 75% (i.e., the eighth threshold is 75%), and a third capability level is associated with 1.5 dB (i.e., the seventh threshold is 1.5 dB) and/or 25% (i.e., the eighth threshold is 25%). The terminal may declare its own capability level to the testing equipment by reporting an identifier of the capability level or directly reporting the specific values of the seventh threshold and/or the eighth threshold according to its own implementation situation. The testing equipment may determine the specific values of the seventh threshold and/or the eighth threshold according to the capability level declared by the terminal, as a judgment basis for whether the terminal detects an IDC problem.

In practical application, in order to further ensure that the terminal can definitely detect the IDC problem during the process of executing the IDC problem test procedure on the terminal, after the execution of the IDC problem construction procedure is completed, the testing equipment can confirm again whether the terminal detects the IDC problem (which can be understood as confirming whether the IDC problem is successfully constructed); when it is confirmed that the terminal detects an IDC problem (it can be understood that the IDC problem is successfully constructed), an IDC problem test procedure is performed on the terminal.

Based on this, in an embodiment, the operation of executing the IDC problem test procedure on the terminal after the IDC problem construction procedure is completed may include:
when the IDC problem construction procedure is completed and the IDC problem is detected by the terminal, the IDC problem test procedure is executed on the terminal.

In practical application, after executing the IDC problem test procedure on the terminal, the testing equipment may confirm again whether the terminal detects an IDC problem in the IDC problem test procedure, that is, execute the relevant operations of the testing method corresponding to FIG. 1, so as to further accurately judge whether the MDT function of the terminal has an IDC mechanism that meets the relevant technical requirements.

In practical application, in the process of executing the IDC problem test procedure on the terminal, the testing equipment may again confirm that the IDC problem detected by the terminal has been solved before testing whether the above-mentioned behavior 2 occurs in the terminal; after confirming that the IDC problem detected by the terminal has been solved, the subsequent flow of testing the IDC problem is continued on the terminal, that is, testing whether the above-mentioned behavior 2 occurs in the terminal, so that it can be further accurately judged whether the MDT function of the terminal has an IDC mechanism that meets the relevant technical requirements.

In practical application, in the process of executing the IDC problem construction procedure on the terminal, first, the testing equipment may configure an operating channel of the second receiver as X0 (the channel X0 is a channel farthest from the operating frequency band of the second transmitter) and configure an operating channel of the second transmitter as Y0 (the channel Y0 is a channel farthest from the operating frequency band of the second receiver), thereby constructing a fifth test condition in which the operating channel of the second receiver and the operating channel of the second transmitter are configured to be in a maximum spacing state, and the second transmitter is configured to be in an unturned-off state. Thereafter, the testing equipment may take the fifth test condition as an initial test condition to reconfigure the operating channels of the second receiver and/or the second transmitter, adjust the operating channels of the second receiver and/or the second transmitter to be closer to each other, measure at least one index associated with the IDC problem on the terminal when the channel environment changes, and confirm whether the IDC problem is detected by judging whether the at least one measurement result satisfies the third test requirement, that is, confirm whether the IDC problem is successfully constructed.

Based on this, in an embodiment, the method may further include that:
during the IDC problem construction procedure, taking the fifth test condition as an initial test condition, configuring an operating channel of the second receiver of the terminal and an operating channel of the second transmitter of the terminal to be close to each other, or configuring an operating channel of the second transmitter of the terminal to be close to an operating channel of the second receiver, or configuring an operating channel of the second receiver of the terminal to be close to an operating channel of the second transmitter. Under the fifth test condition, an operating channel of the second receiver and an operating channel of the second transmitter of the terminal are configured to be in a maximum spacing state, and the second transmitter is configured to be in an unturned-off state.

When the test condition changes, measuring at least one index associated with the IDC problem on the terminal to obtain at least one measurement result of the terminal;
when the at least one measurement result does not satisfy the third test requirement, it is determined that the execution of the IDC problem construction procedure is completed, and the IDC problem is detected by the terminal.

In practical application, in the IDC problem construction procedure, at least two test conditions can be constructed, namely, a fifth test condition and a sixth test condition are constructed. Under the sixth test condition, the operating channel of the second receiver and the operating channel of the second transmitter of the terminal are configured to be in a minimum spacing state, that is, the operating channel of the second receiver and the operating channel of the second transmitter are set at positions as close as possible to the operating channels of each other or at positions overlapping each other. For example, it is assumed that the second receiver is an NR Cell 1 receiver (hereinafter referred to as NR Cell 1) and the second transmitter is a WLAN AP 1 (Cell 27) transmitter (hereinafter referred to as WLAN AP 1 (Cell 27)), the fifth test condition and the sixth test condition may be as shown in Table 9, in which "T0" corresponds to the fifth test condition and "T1" corresponds to the sixth test condition.

**Table 9**

| | Parameter | Unit | NR Cell 1 | WLAN AP 1 (Cell 27) | Remark |
|---|---|---|---|---|---|
| T0 (i.e., the fifth test condition) | SS/PBCH SSS EPRE | dBm/SCS | -88 | | WLAN AP 1 (Cell 27) is configured as being off; |
| | BeaconRSSI | dBm | | Off | |
| | | | | | NR Cell 1 is configured as close to 2400MHz as possible |
| T1 (i.e., the sixth test condition) | SS/PBCH | dBm/SCS | -88 | | Channel 1 (2401~2423MHz) is configured to WLAN AP 1 (Cell 27); |
| | SSS EPRE | | | | |
| | BeaconRSSI | dBm | | -80 | |
| | | | | | NR Cell 1 is configured as close to 2400MHz as possible |

In practical application, the third test requirement may include an absolute value threshold (i.e., the threshold of type 1 described above). Exemplarily, after constructing the fifth test condition by configuring the operating channel of the second receiver as X0 (the channel X0 is the channel farthest from the operating frequency band of the second transmitter) and configuring the operating channel of the second transmitter as Y0 (the channel Y0 is the channel farthest from the operating frequency band of the second receiver), the testing equipment may measure the reference sensitivity and/or throughput of the second receiver, and may confirm whether the reference sensitivity and/or throughput of the second receiver satisfies the third test requirement, that is, the third test requirement may include an absolute value threshold corresponding to the reference sensitivity and/or throughput of the second receiver. If the reference sensitivity and/or throughput of the second receiver does not meet the third test requirement, the testing equipment may determine that the terminal has detected an IDC problem; if the reference sensitivity and/or throughput of the second receiver meets the third test requirement, the testing equipment may determine that the terminal has not detected an IDC problem. When no IDC problem is detected by the terminal, the testing equipment may configure the operating channel of the second receiver and the operating channel of the second transmitter to gradually approach each other. Every time the operating channel of the second receiver and/or the second transmitter is adjusted (i.e., the test conditions change), whether it is adjusted once or multiple times (i.e., at least twice), the reference sensitivity and/or throughput of the second receiver need to be tested once, until the reference sensitivity and/or throughput of the second receiver do not meet the third test requirement, and the testing equipment may determine that the terminal detects the IDC problem at this time.

When the testing equipment configures the operating channel of the second receiver and the operating channel of the second transmitter to be gradually close to each other, as shown in FIG. 4, the testing equipment may configure the operating channel of the second receiver and the operating channel of the second transmitter to be close to each other, and determine whether the terminal detects an IDC problem based on the third test requirement. If the maximum number of channels in the operating frequency band of the second receiver is N (N is an integer greater than 1), then n is a positive integer starting from 1 in the range of [1, N]; if the maximum number of channels in the operating frequency band of the second transmitter is M (M is an integer greater than 1), then m is a positive integer starting from 1 in the range of [1, M]. Specifically, as shown in FIG. 4, when the measured reference sensitivity and/or throughput of the second receiver satisfies the third test requirement, the value of m increases by 1, and the value of n also increases by 1, i.e., the operating channel of the second receiver moves one channel in a direction close to the operating frequency band of the interference source (i.e., the second transmitter), and the operating channel of the second transmitter also moves one channel in a direction close to the operating frequency band of the second receiver at the same time. At this time, the testing equipment needs to measure the reference sensitivity and/or throughput of the second receiver again, and determine again whether the reference sensitivity and/or throughput of the second receiver satisfies the third test requirement. If the reference sensitivity and/or throughput of the second receiver do not meet the third test requirement, the testing equipment may determine that the terminal detects an IDC problem at this time, and may enter a subsequent IDC problem test procedure. Thereafter, the testing equipment may perform an IDC problem test procedure on the terminal. If the reference sensitivity and/or throughput of the second receiver satisfies the third test requirement, the terminal still does not detect an IDC problem at this time, the value of m continues to increase by 1, and the value of n also continues to increase by 1, until the reference sensitivity and/or throughput of the second receiver does not satisfy the third test requirement. Here, if the terminal has not detected the IDC problem at all times, n = N and m = M may be set, that is, the operating channel of the second receiver and the operating channel of the second transmitter may be set at positions as close as possible to the operating channels of each other or at positions overlapping each other, that is, the sixth test condition may be constructed, and if the terminal does not detect the IDC problem in the sixth test condition either, the construction of the IDC problem fails.

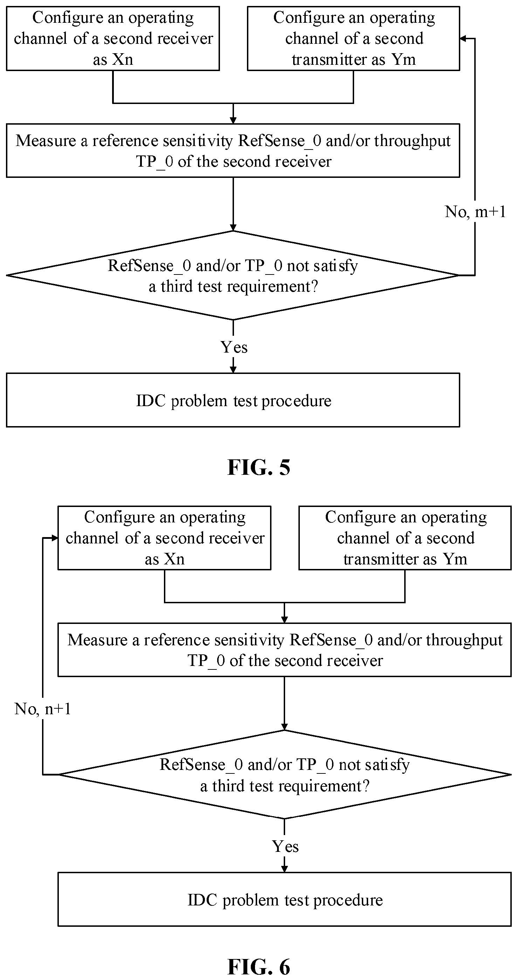

When the testing equipment configures the operating channel of the second receiver and the operating channel of the second transmitter to gradually approach each other, as shown in FIG. 5, the testing equipment may configure the operating channel of the second transmitter to approach the operating channel of the second receiver, and determine whether the terminal detects an IDC problem based on the third test requirement. If the maximum number of channels in the operating frequency band of the second transmitter is M (M is an integer greater than 1), m is a positive integer starting from 1 in the range of [1, M]. Specifically, as shown in FIG. 5, when the measured reference sensitivity and/or throughput of the second receiver satisfies the third test requirement, the value of m increases by 1, i.e., the operating channel of the interference source (i.e., the second transmitter) moves one channel in a direction closer to the operating frequency band of the second receiver. At this time, the testing equipment needs to measure the reference sensitivity and/or throughput of the second receiver again, and determine again whether the reference sensitivity and/or throughput of the second receiver satisfy the third test requirement. If the reference sensitivity and/or throughput of the second receiver do not meet the third test requirement, the testing equipment may determine that the terminal detects an IDC problem at this time, and may enter a subsequent IDC problem test procedure; thereafter, the testing equipment may perform an IDC problem test procedure on the terminal. If the reference sensitivity and/or throughput of the second receiver satisfy the third test requirement, the terminal still has not detected an IDC problem at this time, then the value of m continues to increase by 1 until the reference sensitivity and/or throughput of the second receiver does not satisfy the third test requirement. Here, if the terminal has not detected the IDC problem at all times, m = M may be set, that is, the operating channel of the second transmitter is set at a position as close as possible to or overlapping with the operating channel of the second receiver; if the terminal still does not detect an IDC problem, the IDC problem construction fails.

When the testing equipment configures the operating channel of the second receiver and the operating channel of the second transmitter to gradually approach each other, as shown in FIG. 6, the testing equipment may configure the operating channel of the second receiver to approach the operating channel of the second transmitter, and determine whether the terminal detects an IDC problem based on the third test requirement. If the maximum number of channels in the operating frequency band of the second receiver is N (N is an integer greater than 1), then a value of n is a positive integer starting from 1 in the range of [1, N]. Specifically, as shown in FIG. 6, when the measured reference sensitivity and/or throughput of the second receiver satisfies the third test requirement, a value of n increases by 1, i.e., the operating channel of the second receiver moves one channel in a direction close to the operating frequency band of the interference source (i.e., the second transmitter). At this time, the testing equipment needs to measure the reference sensitivity and/or throughput of the second receiver again, and determine again whether the reference sensitivity and/or throughput of the second receiver satisfy the third test requirement. If the reference sensitivity and/or throughput of the second receiver do not meet the third test requirement, the testing equipment may determine that the terminal detects an IDC problem at this time, and may enter a subsequent IDC problem test procedure; thereafter, the testing equipment may perform an IDC problem test procedure on the terminal. If the reference sensitivity and/or throughput of the second receiver satisfy the third test requirement, the terminal still has not detected an IDC problem at this time, then the value of n continues to increase by 1 until the reference sensitivity and/or throughput of the second receiver does not satisfy the third test requirement. Here, if the terminal has not detected the IDC problem at all times, n = N may be set, that is, the operating channel of the second receiver is set at a position as close as possible to or overlapping with the operating channel of the second transmitter; if the terminal still does not detect an IDC problem, the IDC problem construction fails.

In practical application, the third test requirement may include an absolute value threshold (i.e., the above-mentioned threshold of type 1) and a relative value threshold (also referred to as a change threshold, i.e., the above-mentioned threshold of type 2). Exemplarily, after constructing the fifth test condition by configuring the operating channel of the second receiver as X0 (the channel X0 is the channel farthest from the operating frequency band of the second transmitter) and configuring the operating channel of the second transmitter as Y0 (the channel Y0 is the channel farthest from the operating frequency band of the second receiver), the testing equipment may measure the reference sensitivity and/or throughput of the second receiver, and may confirm whether the reference sensitivity and/or throughput of the second receiver satisfies the third test requirement. If the reference sensitivity and/or throughput of the second receiver do not meet the third test requirement, the testing equipment may determine that the terminal has detected an IDC problem; or, if the reference sensitivity and/or throughput of the second receiver satisfy the third test requirement, the testing equipment may determine that the terminal has not detected an IDC problem, and may take the currently measured reference sensitivity and/or throughput of the second receiver as a reference value. When the IDC problem is not detected by the terminal, the testing equipment may configure the operating channel of the second receiver and the operating channel of the second transmitter to gradually approach each other, and it is necessary to test the reference sensitivity and/or throughput of the second receiver once every time the operating channel of the second receiver and/or the operating channel of the second transmitter are adjusted once or multiple times (i.e., test conditions change), until a change in the reference sensitivity and/or throughput of the second receiver relative to the reference value reaches the threshold T (for example, the change in the reference sensitivity reaches the above XdB), and then the testing equipment may determine that the IDC problem is detected by the terminal at this time.

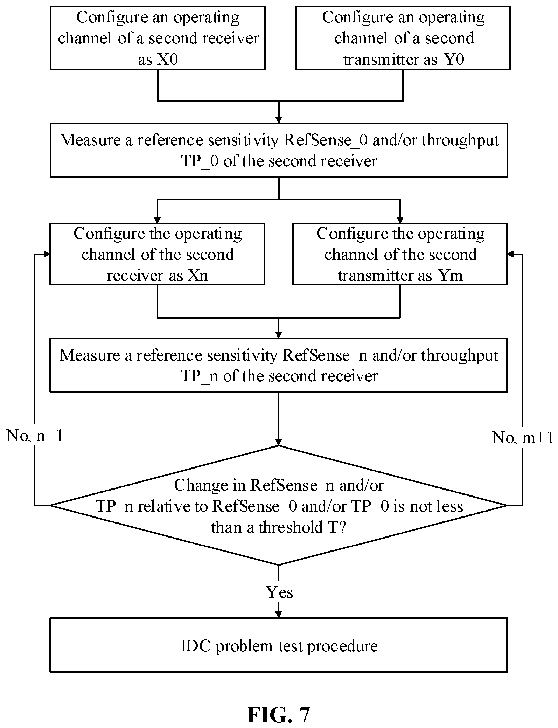

When the testing equipment configures the operating channel of the second receiver and the operating channel of the second transmitter to gradually approach each other, as shown in FIG. 7, the testing equipment may configure the operating channel of the second receiver and the operating channel of the second transmitter to approach each other, and determine whether the terminal detects an IDC problem based on the third test requirement (that is, the change threshold T). If a maximum number of channels in the operating frequency band of the second receiver is N (N is an integer greater than 1), then the value of n is a positive integer starting from 1 in the range of [1, N]; and if a maximum number of channels in the operating frequency band of the second transmitter is M (M is an integer greater than 1), then the value of m is a positive integer starting from 1 in the range of [1, M]. The threshold T may be a certain value (e.g., 3dB) for reference sensitivity, and a percentage value (e.g., 50%) for throughput. Specifically, as shown in FIG. 7, once it is determined that a change in the reference sensitivity RefSense_n and/or the throughput TP_n of the second receiver relative to the baseline reference sensitivity RefSense_0 and/or the reference throughput TP_0 of the second receiver is less than the threshold T, the value of m increases by 1, and the value of n also increases by 1, that is, the operating channel of the second receiver moves one channel in a direction close to the operating frequency band of the interference source (i.e., the second transmitter), and the operating channel of the second transmitter also moves one channel in a direction close to the operating frequency band of the second receiver at the same time. At this time, the testing equipment needs to measure the reference sensitivity RefSense_n and/or the throughput TP_n of the second receiver again, and judge again whether the change in RefSense_n and/or TP_n relative to RefSense_0 and/or TP_0 is less than the threshold T; if it is determined that the change in RefSense_n and/or TP_n relative to RefSense_0 and/or TP_0 is not less than the threshold T, the testing equipment may determine that the terminal detects an IDC problem at this time, and may enter a subsequent IDC problem test procedure; thereafter, the testing equipment may perform an IDC problem test procedure on the terminal. If it is determined that the change in RefSense_n and/or TP_n relative to RefSense_0 and/or TP_0 is less than the threshold T, the terminal still does not detect the IDC problem at this time, the value of m continues to increase by 1, and the value of n also continues to increase by 1 until the change in RefSense_n and/or TP_n relative to RefSense_0 and/or TP_0 is not less than the threshold T. Here, if the terminal has not detected the IDC problem at all times, n = N and m = M may be set, that is, the operating channel of the second receiver and the operating channel of the second transmitter may be set at positions as close as possible to the operating channels of each other or at positions overlapping each other, that is, the sixth test condition may be constructed, and if the terminal does not detect the IDC problem in the sixth test condition either, the construction of the IDC problem fails.

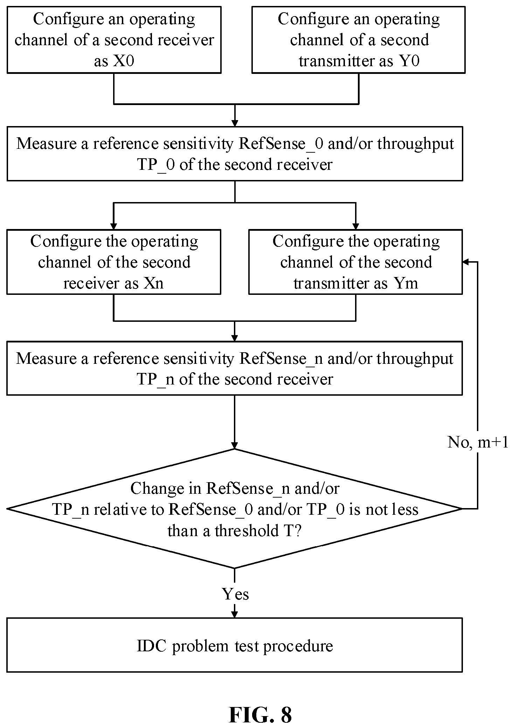

When the testing equipment configures the operating channel of the second receiver and the operating channel of the second transmitter to gradually approach each other, as shown in FIG. 8, the testing equipment may configure the operating channel of the second transmitter to approach the operating channel of the second receiver, and determine whether the terminal detects an IDC problem based on the third test requirement (i.e., the change threshold T). If the maximum number of channels in the operating frequency band of the second transmitter is M (M is an integer greater than 1), then the value of m is a positive integer starting from 1 in the range of [1, M]. The threshold T may be a certain value (e.g., 3dB) for reference sensitivity, and a percentage value (e.g., 50%) for throughput. Specifically, as shown in FIG. 8, once it is determined that an change of the reference sensitivity RefSense_n and/or the throughput TP_n of the second receiver relative to the baseline reference sensitivity RefSense_0 and/or the reference throughput TP_0 of the second receiver is less than the threshold T, the value of m increases by 1, i.e., the operating channel of the interference source (i.e., the second transmitter) moves one channel in a direction close to the operating frequency band of the second receiver. At this time, the testing equipment needs to measure the reference sensitivity RefSense_n and/or the throughput TP_n of the second receiver again, and judge again whether the change in RefSense_n and/or TP_n relative to RefSense_0 and/or TP_0 is less than the threshold T. If it is determined that the change in RefSense_n and/or TP_n relative to RefSense_0 and/or TP_0 is not less than the threshold T, the testing equipment may determine that the terminal detects an IDC problem at this time, and may enter a subsequent IDC problem test procedure; thereafter, the testing equipment may perform an IDC problem test procedure on the terminal. If it is determined that the change in RefSense_n and/or TP_n relative to RefSense_0 and/or TP_0 is less than the threshold T, the IDC problem is not detected by the terminal at this time, and the value of m continues to increase by 1 until the change in RefSense_n and/or TP_n relative to RefSense_0 and/or TP_0 is not less than the threshold T. Here, if the terminal has not detected the IDC problem at all times, m = M may be set, that is, the operating channel of the second transmitter is set at a position as close as possible to or overlapping with the operating channel of the second receiver; if the terminal still does not detect an IDC problem, the IDC problem construction fails.

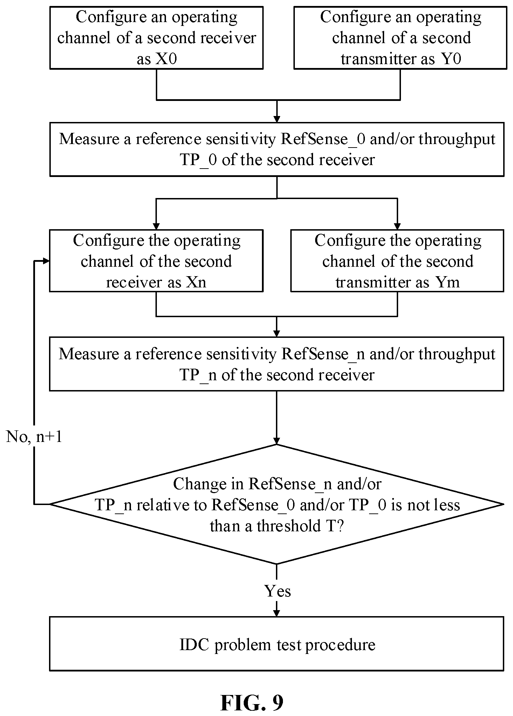

When the testing equipment configures the operating channel of the second receiver and the operating channel of the second transmitter to gradually approach each other, as shown in FIG. 9, the testing equipment may configure the operating channel of the second receiver to approach the operating channel of the second transmitter, and determine whether the terminal detects an IDC problem based on the third test requirement (i.e., the change threshold T). If the maximum number of channels in the operating frequency band of the second receiver is N (N is an integer greater than 1), then the value of n is a positive integer starting from 1 in the range of [1, N]. The threshold T may be a certain value (e.g., 3dB) for reference sensitivity, and a percentage value (e.g., 50%) for throughput. Specifically, as shown in FIG. 9, once it is determined that a change in the reference sensitivity RefSense_n and/or the throughput TP_n of the second receiver relative to the baseline reference sensitivity RefSense_0 and/or the reference throughput TP_0 of the second receiver is less than the threshold T, the value of n increases by 1, that is, the operating channel of the second receiver is moved by one channel in a direction close to the operating frequency band of the interference source (i.e., the second transmitter). At this time, the testing equipment needs to measure the reference sensitivity RefSense_n and/or the throughput TP_n of the second receiver again, and judge again whether the change in RefSense_n and/or TP_n relative to RefSense_0 and/or TP_0 is less than the threshold T. If it is determined that the change in RefSense_n and/or TP_n compared with RefSense_0 and/or TP_0 is not less than the threshold T, the testing equipment may determine that the terminal detects an IDC problem at this time, and may enter a subsequent IDC problem test procedure; thereafter, the testing equipment may perform an IDC problem test procedure on the terminal. If it is determined that the change of RefSense_n and/or TP_n compared with RefSense_0 and/or TP_0 is less than the threshold T, the IDC problem is not detected by the terminal at this time, and the value of n continues to increase by 1 until the change of RefSense_n and/or TP_n relative to RefSense_0 and/or TP_0 is not less than the threshold T. Here, if the terminal has not detected the IDC problem at all times, n = N may be set, that is, the operating channel of the second receiver is set at a position as close as possible to or overlapping with the operating channel of the second transmitter; if the terminal still does not detect an IDC problem, the IDC problem construction fails.

In practical application, as can be seen from the above description, the third test requirement may also include an absolute value threshold (i.e., the above-mentioned threshold of type 1) and/or a relative value threshold (i.e., the above-mentioned threshold of type 2, i.e., the above-mentioned change threshold T).

Based on this, in an embodiment, the indices associated with the third test requirement may include N indices, N being an integer greater than or equal to 1. The satisfying the third test requirement may include at least one of the following:
at least one of the N indices is better than or equal to a corresponding threshold; or,
a change in at least one of the N indices is better than or equal to a corresponding threshold.

Specifically, in an embodiment, the satisfying the third test requirement may include at least one of the following:
a reference sensitivity of a second receiver of the terminal is better than (i.e., less than) or equal to a ninth threshold;
a throughput of the second receiver of the terminal is better than (i.e., greater than) or equal to a tenth threshold;
a change in the reference sensitivity of the second receiver of the terminal under the current test condition and the fifth test condition is better than (i.e., less than) or equal to an eleventh threshold (i.e., the above change threshold T); or,
a change in the throughput of the second receiver of the terminal under the current test condition and the fifth test condition is better than (i.e., less than) or equal to a twelfth threshold (i.e., the above change threshold T).

In practical application, the eleventh threshold and/or the twelfth threshold correspond to the change threshold T. Specific values of the ninth threshold, the tenth threshold, the eleventh threshold, and the twelfth threshold may be set in advance according to test requirements. Alternatively, an association between different capability levels of the terminal and different values of a threshold (that is, the ninth threshold, the tenth threshold, the eleventh threshold, and twelfth threshold) may be set in advance, and the testing equipment may determine specific values of a threshold (that is, the ninth threshold, the tenth threshold, the eleventh threshold, and the twelfth threshold) using the capability level of the terminal. For example, an association between different capability levels of the terminal and different values of the eleventh threshold and/or the twelfth threshold may be set in advance: the first capability level (default capability level) is associated with 3 dB (i.e., the eleventh threshold is 3 dB, that is, the change threshold T is 3 dB) and/or 50% (i.e., the twelfth threshold is 50%, that is, the change threshold T is 50%), the second capability level is associated with 6 dB (i.e., the eleventh threshold is 6 dB, that is, the change threshold T is 6 dB) and/or 75% (i.e., the twelfth threshold is 75%, that is, the change threshold T is 75%), and the third capability level is associated with 1.5 dB (i.e., the eleventh threshold is 1.5 dB, that is, the change threshold T is 1.5 dB) and/or 25% (i.e., the twelfth threshold is 25%, that is, the change threshold T is 25%). The terminal may declare its own capability level to the testing equipment by reporting the identifier of the capability level or directly reporting the specific values of the eleventh threshold and/or the twelfth threshold according to its own implementation situation. The testing equipment may determine a specific value of the eleventh threshold and/or the twelfth threshold according to the capability level declared by the terminal, as a basis for determining whether the terminal detects an IDC problem.

In an embodiment, the operation of executing the IDC problem construction procedure on the terminal may include:
configuring the terminal with a first signal that enables the terminal to detect an IDC problem.

In practical application, the embodiment of the present disclosure does not limit the specific type of the first signal, as long as the function thereof is realized. Exemplarily, the first signal may include a man machine interface (MMI) signal, an attention (AT) command, or the like. In addition, the first signal can also enable the terminal to solve the detected IDC problem, that is, "the UE detects IDC problem" and "the IDC problem detected by the UE are resolved" could be done by MMI or AT command.

According to the testing methods provided by the embodiments of the present disclosure, an IDC problem test procedure is executed on the terminal; in a case where a first test result is not obtained, confirming whether the terminal detected an IDC problem in the IDC problem test procedure; and generating a second test result for the terminal according to whether the terminal detected the IDC problem in the IDC problem test procedure; Alternatively, confirming whether the terminal detected an IDC problem; when it is confirmed that the terminal detected the IDC problem, executing an IDC problem test procedure on the terminal to generate a third test result for the terminal, or when it is confirmed that the terminal did not detect the IDC problem, executing an IDC problem construction procedure on the terminal; after the execution of the IDC problem construction procedure is completed, the IDC problem test procedure is executed on the terminal to generate a third test result for the terminal. According to the solutions provided by the embodiments of the present disclosure, after the IDC problem test procedure is executed on the terminal, when the terminal does not pass the test, that is, when a test result that passes the test (that is, the above-mentioned first test result) is not obtained, whether the terminal detected an IDC problem in the IDC problem test procedure is confirmed, and then a final test result for the terminal is generated according to the confirmed result; alternatively, before executing the IDC problem test procedure for the terminal, first confirming whether the terminal detected the IDC problem, and then executing the IDC problem test procedure for the terminal when confirming that the terminal detected the IDC problem, or first executing the IDC problem construction procedure for the terminal to construct the IDC problem when confirming that the terminal did not detect the IDC problem, and then executing the IDC problem test procedure for the terminal. In this manner, it is possible to avoid misjudging that the terminal does not pass the test in a case where "the IDC problem does not occur due to the excellent design of the terminal (it can be understood that the terminal can support the IDC mechanism and can resolve the IDC problem) in the process of executing the IDC problem test procedure on the terminal. In other words, it is possible to avoid a problem in which the qualified terminal that can support the IDC mechanism is misjudged as the unqualified terminal that cannot support the IDC mechanism, and it is possible to accurately judge whether or not the terminal correctly supports the related functions of the IDC problem, that is, it is possible to accurately judge whether or not the MDT function of the terminal has an IDC mechanism that meets the related technical requirements.

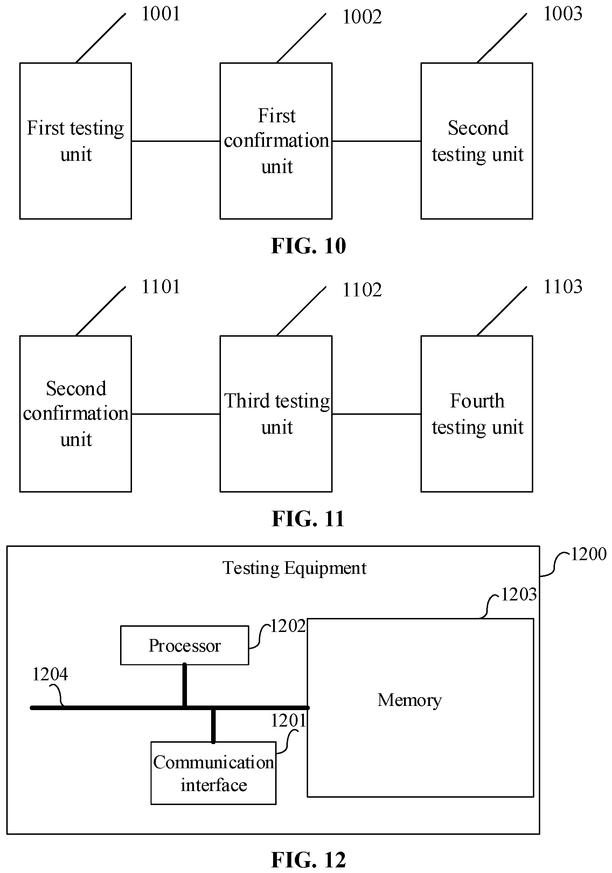

In order to realize the method of the embodiment of the present disclosure, the embodiment of the present disclosure also provides a testing apparatus, which is arranged on a testing equipment, as shown in FIG. 10, the apparatus includes:
a first testing unit 1001, configured to perform an IDC problem test procedure on a terminal;
a first confirmation unit 1002, configured to confirm whether the terminal detected an IDC problem in the IDC problem test procedure when a first test result is not obtained; and
a second testing unit 1003, configured to generate a second test result for the terminal based on the confirmation of whether the terminal detected the IDC problem in the IDC problem test procedure.

In an embodiment, the first confirmation unit 1002 is further configured to:
construct at least one test condition identical to that for the IDC problem test procedure;
for each of the at least one test condition, measure at least one index associated with an IDC problem on the terminal to obtain at least one measurement result of the terminal; and
confirm whether the terminal detected the IDC problem in the IDC problem test procedure based on the at least one measurement result.

In an embodiment, the first confirmation unit 1002 is further configured to:
during executing the IDC problem test procedure on the terminal, for each of at least one constructed test condition, measure at least one index associated with the IDC problem on the terminal to obtain at least one measurement result of the terminal; and
confirm whether the terminal detected an IDC problem in the IDC problem test procedure based on the at least one measurement result.

In an embodiment, the first confirmation unit 1002 is further configured to:
for a first test condition, measure at least one index associated with an IDC problem on the terminal; or
for the first test condition and a second test condition, measure at least one index associated with the IDC problem on the terminal, respectively;
where under the first test condition, an operating channel of a first receiver and an operating channel of a first transmitter of the terminal are configured to be in a minimum spacing state;
under the second test condition, the operating channel of the first receiver and the operating channel of the first transmitter of the terminal are configured to be in a maximum spacing state.

In an embodiment, the first confirmation unit 1002 is further configured to:
in a case where the at least one measurement result does not meet the first test requirement, indicate (which may be understood as confirm) that the terminal detected the IDC problem in the IDC problem test procedure; or
in a case where the at least one measurement result satisfies the first test requirement, indicate that the terminal did not detect the IDC problem in the IDC problem test procedure.

In an embodiment, the first confirmation unit 1002 is further configured to determine a third threshold and/or a fourth threshold based on a capability level of the terminal, where different capability levels correspond to different values of the third threshold and/or the fourth threshold.

In an embodiment, the second testing unit 1003 is further configured to:
in a case where the terminal detected an IDC problem in the IDC problem test procedure, determine that the second test result indicates that the terminal does not pass the test; or,
in a case where the terminal did not detect an IDC problem in the IDC problem test procedure, determine that the second test result indicates that the terminal passes the test.

In practical application, the first testing unit 1001 and the first confirmation unit 1002 may be implemented by a processor in a testing equipment in combination with a communication interface; and the second testing unit 1003 may be implemented by the processor in the testing equipment.

In order to realize the method of the embodiment of the present disclosure, an embodiment of the present disclosure also provides a testing apparatus, which is arranged on a testing equipment, as shown in FIG. 11, the apparatus includes:
a second confirmation unit 1101, configured to confirm whether the terminal detected an IDC problem; and
a third testing unit 1102, configured to execute an IDC problem test procedure on the terminal to generate a third test result for the terminal when it is confirmed that the terminal detected the IDC problem; alternatively, in a case where it is confirmed that the terminal did not detect the IDC problem, executing an IDC problem construction procedure on the terminal; after the execution of the IDC problem construction procedure is completed, the IDC problem test procedure is executed on the terminal to generate a third test result for the terminal.

In an embodiment, the second confirmation unit 1101 is further configured to:
construct at least one test condition;
for each of the at least one test condition, measure at least one index associated with an IDC problem on the terminal to obtain at least one measurement result of the terminal; and
confirm whether the terminal detected an IDC problem based on the at least one measurement result.

In an embodiment, the second confirmation unit 1101 is further configured to:
indicate (which may be understood as confirm) that the terminal did not detect an IDC problem in a case where the at least one measurement result satisfies a second test requirement; or,
in a case where the at least one measurement result does not meet the second test requirement when the second transmitter of the terminal is configured as not being off, and the at least one measurement result meets the second test requirement when the second transmitter of the terminal is configured as being off, indicate that the terminal detected the IDC problem.

In an embodiment, the second confirmation unit 1101 is further configured to:
in a case where the at least one measurement result does not meet the second test requirement when the second transmitter of the terminal is configured as being off, or,
in a case where the at least one measurement result does not meet the second test requirement when the second transmitter of the terminal is configured as not being off, and the at least one measurement result also does not meet the second test requirement when the second transmitter of the terminal is configured as being off,
generate a fourth test result for the terminal, the fourth test result indicating that the terminal does not pass the test.

In an embodiment, as shown in FIG. 11, the apparatus may further include a fourth testing unit 1103, which is configured to:
construct at least one test condition; and
for each of the at least one test condition, measure at least one index associated with an IDC problem on the terminal to obtain at least one measurement result of the terminal;
in a case where the at least one measurement result does not meet a second test requirement when a second transmitter of the terminal is configured as being off, or,
in a case where the at least one measurement result does not meet the second test requirement when the second transmitter of the terminal is configured as not being off, and the at least one measurement result also does not meet the second test requirement when the second transmitter of the terminal is configured as being off,
generate a fourth test result for the terminal, the fourth test result indicating that the terminal does not pass the test.

In an embodiment, the third testing unit 1102 is further configured to execute the IDC problem test procedure on the terminal after the IDC problem construction procedure is completed and the terminal detected the IDC problem.

In an embodiment, the third testing unit 1102 is further configured to:
during the IDC problem construction procedure, take the fifth test condition as an initial test condition, configure an operating channel of the second receiver of the terminal and an operating channel of the second transmitter to be close to each other, or configure an operating channel of the second transmitter of the terminal to be close to an operating channel of the second receiver, or configure an operating channel of the second receiver of the terminal to be close to an operating channel of the second transmitter; where, under the fifth test condition, the operating channel of the second receiver and the operating channel of the second transmitter of the terminal are configured to be in a maximum spacing state, and the second transmitter is configured as not being off;
when the test condition changes, measure at least one index associated with the IDC problem on the terminal to obtain at least one measurement result of the terminal;
when the at least one measurement result does not satisfy the third test requirement, it is determined that the execution of the IDC problem construction procedure is completed, and the terminal detected the IDC problem.

In an embodiment, the third testing unit 1102 is further configured to configure a first signal to the terminal, the first signal being capable of causing the terminal to detect an IDC problem.

In practical application, the second confirmation unit 1101, the third testing unit 1102, and the fourth testing unit 1103 may be implemented by a processor in a testing equipment in combination with a communication interface.

It should be noted that, in the testing apparatuses provided in the above-described embodiments, only the division of the above-described program modules is used as an example when testing, but in actual application, the above-described processing may be allocated to be completed by different program modules as necessary, that is, the internal structure of the device may be divided into different program modules to complete all or part of the above-described processing. In addition, the testing apparatuses provided in the above embodiments belong to the same concept as the test method embodiments, and the specific implementation process thereof is detailed in the method embodiments, which will not be described again here.

Based on hardware implementation of the above program modules, and in order to implement the methods of the embodiments of the present disclosure, an embodiment of the present disclosure also provides a testing equipment, as shown in FIG. 12, the testing equipment 1200 includes:
a communication interface 1201 capable of performing information interaction with a terminal;
a processor 1202, which is connected with the communication interface 1201 to realize information interaction with the terminal, and is configured to execute the methods provided by the above one or more technical solutions when running a computer program; and
a memory 1203 on which the computer program is stored.

Specifically, when implementing the testing method according to an embodiment of the present disclosure, the processor 1202 is configured to:
perform an IDC problem test procedure on a terminal;
in a case where a first test result is not obtained, confirm whether the terminal detected an IDC problem in the IDC problem test procedure;
generate a second test result for the terminal based on the confirmation of whether the terminal detected the IDC problem in the IDC problem test procedure.

In an embodiment, the processor 1202 is further configured to:
construct at least one test condition identical to that for the IDC problem test procedure;
for each of the at least one test condition, measure at least one index associated with an IDC problem on the terminal to obtain at least one measurement result of the terminal; and
confirm whether the terminal detected an IDC problem in the IDC problem test procedure based on the at least one measurement result.

In an embodiment, the processor 1202 is further configured to:
during executing the IDC problem test procedure on the terminal, for each of at least one constructed test condition, measure at least one index associated with the IDC problem on the terminal to obtain at least one measurement result of the terminal; and
confirm whether the terminal detected an IDC problem in the IDC problem test procedure based on the at least one measurement result.

In an embodiment, the processor 1202 is further configured to:
for a first test condition, measure at least one index associated with an IDC problem on the terminal; or,
for the first test condition and a second test condition, measure at least one index associated with an IDC problem on the terminal, respectively;
where under the first test condition, an operating channel of a first receiver and an operating channel of a first transmitter of the terminal are configured to be in a minimum spacing state;
under the second test condition, the operating channel of the first receiver and the operating channel of the first transmitter of the terminal are configured to be in a maximum spacing state.

In an embodiment, the processor 1202 is further configured to:
indicate (which can be understood as confirm) that the terminal detected an IDC problem in the IDC problem test procedure in a case where the at least one measurement result does not meet the first test requirement; or,
in a case where the at least one measurement result satisfies the first test requirement, indicate that the terminal did not detect an IDC problem in the IDC problem test procedure.

In an embodiment, the processor 1202 is further configured to determine a third threshold and/or a fourth threshold based on a capability level of the terminal, where different capability levels correspond to different values of the third threshold and/or the fourth threshold.

In an embodiment, the processor 1202 is further configured to:
in a case where the terminal detected an IDC problem in the IDC problem test procedure, determine that the second test result indicates that the terminal does not pass the test; or,
in a case where the terminal did not detect an IDC problem in the IDC problem test procedure, determine that the second test result indicates that the terminal passes the test.

Correspondingly, when implementing another testing method according to the embodiment of the present disclosure, the processor 1202 is configured to:
confirm whether a terminal detected an IDC problem; and
when it is confirmed that the terminal detected the IDC problem, execute an IDC problem test procedure on the terminal to generate a third test result for the terminal; or,
in a case where it is confirmed that the terminal did not detect the IDC problem, execute an IDC problem construction procedure on the terminal; after the execution of the IDC problem construction procedure is completed, the IDC problem test procedure is executed on the terminal to obtain a third test result for the terminal.

In an embodiment, the processor 1202 is further configured to:
construct at least one test condition;
for each of the at least one test condition, measure at least one index associated with an IDC problem on the terminal to obtain at least one measurement result of the terminal; and
confirm whether the terminal detected the IDC problem based on the at least one measurement result.

In an embodiment, the processor 1202 is further configured to:
indicate (which may be understood as confirm) that the terminal did not detect an IDC problem in a case where the at least one measurement satisfies a second test requirement; or,
in a case where the at least one measurement result does not meet the second test requirement when the second transmitter of the terminal is configured as not being off, and the at least one measurement result meets the second test requirement when the second transmitter of the terminal is configured as being off, indicate that the terminal detected the IDC problem.

In an embodiment, the processor 1202 is further configured to:
in a case where the at least one measurement result does not meet a second test requirement when a second transmitter of the terminal is configured as being off, or,
in a case where the at least one measurement result does not meet the second test requirement when the second transmitter of the terminal is configured as not being off, and the at least one measurement result also does not meet the second test requirement when the second transmitter of the terminal is configured as being off,
generate a fourth test result for the terminal, the fourth test result indicating that the terminal does not pass the test.

In an embodiment, the processor 1202 is further configured to:
construct at least one test condition;
for each of the at least one test condition, measure at least one index associated with an IDC problem on the terminal to obtain at least one measurement result of the terminal;
in a case where the at least one measurement result does not meet a second test requirement when a second transmitter of the terminal is configured as being off, or,
in a case where the at least one measurement result does not meet the second test requirement when the second transmitter of the terminal is configured as not being off, and the at least one measurement result also does not meet the second test requirement when the second transmitter of the terminal is configured as being off,
generate a fourth test result for the terminal, the fourth test result indicating that the terminal does not pass the test.

In an embodiment, the processor 1202 is further configured to execute the IDC problem test procedure on the terminal when the IDC problem construction procedure is executed and the terminal detected the IDC problem.

In an embodiment, the processor 1202 is further configured to:
during the IDC problem construction procedure, take the fifth test condition as an initial test condition, configure an operating channel of the second receiver of the terminal and an operating channel of the second transmitter to be close to each other, or configure an operating channel of the second transmitter of the terminal to be close to an operating channel of the second receiver, or configure an operating channel of the second receiver of the terminal to be close to an operating channel of the second transmitter; where under the fifth test condition, an operating channel of a second receiver and an operating channel of a second transmitter of the terminal are configured to be in a maximum spacing state, and the second transmitter is configured as not being off;
when the test condition changes, measuring at least one index associated with the IDC problem on the terminal to obtain at least one measurement result of the terminal;
when the at least one measurement result does not satisfy the third test requirement, it is determined that the execution of the IDC problem construction procedure is completed, and the IDC problem is detected by the terminal.

In an embodiment, the processor 1202 is further configured to configure a first signal to the terminal, the first signal enabling the terminal to detect an IDC problem.

It should be noted that the specific processing process of the processor 1202 can be understood with reference to the above methods, and will not be described again here.

Of course, in practical application, the various components in the testing equipment 1200 are coupled together by the bus system 1204. It will be appreciated that the bus system 1204 is used to enable connected communication between these components. The bus system 1204 includes a power bus, a control bus, and a status signal bus in addition to a data bus. However, for clarity of explanation, the various buses are labeled as bus system 1204 in FIG. 12.

The memory 1203 in the embodiment of the present disclosure is used to store various types of data to support the operation of the testing equipment 1200. Examples of such data include any computer program for operation on the testing equipment 1200.

The methods disclosed in the above-described embodiments of the present disclosure may be applied to the processor 1202 or may be implemented by the processor 1202. The processor 1202 may be an integrated circuit chip with signal processing capabilities. In the implementation process, each step of the methods described above may be completed by an integrated logic circuit of hardware in the processor 1202 or instructions in the form of software. The processor 1202 may be a general purpose processor, a digital signal processor (DSP), or other programmable logic devices, a discrete gate or transistor logic device, a discrete hardware component, or the like. The processor 1202 may implement or execute various methods, steps, and logic block diagrams disclosed in embodiments of the present disclosure. The general purpose processor may be a microprocessor or any conventional processor or the like. The steps of the method disclosed in connection with the embodiment of the present disclosure can be directly embodied as execution by a hardware decoding processor, or execution by a combination of hardware and software modules in the decoding processor. The software modules may be located in a storage medium located in the memory 1203, and the processor 1202 reads the information in the memory 1203 and completes the steps of the aforementioned methods in conjunction with its hardware.

In an exemplary embodiment, the testing equipment 1200 may be implemented by one or more application specific integrated circuits (ASICs), DSPs, programmable logic devices (PLDs), complex programmable logic devices (CPLDs), field-programmable gate arrays (FPGAs), general-purpose processors, controllers, microcontrollers (MCUs), microprocessors, or other electronic components for performing the aforementioned methods.

It can be understood that the memory 1203 of the embodiment of the present disclosure may be a volatile memory or a non-volatile memory, and may include both volatile memory and non-volatile memory. The non-volatile memory may be a read only memory (ROM), a programmable read-only memory (PROM), an erasable programmable read-only memory (EPROM), an electrically erasable programmable read-only memory (EEPROM), a ferromagnetic random access memory (FRAM), a flash memory, a magnetic surface memory, an optical disk, or a CD-ROM (compact disc read-only memory). The magnetic surface memory may be a magnetic disk memory or a magnetic tape memory. The volatile memory may be a random access memory (RAM), which serves as an external cache. By way of example, but not limitation, many forms of RAM are available, such as static random access memory (SRAM), synchronous static random access memory (SSRAM), dynamic random access memory (DRAM), synchronous dynamic random access memory (SDRAM), double data rate synchronous dynamic random access memory (DDRSDRAM), enhanced synchronous dynamic random access memory (ESDRAM), synchronously connect dynamic random access memory (SLDRAM, syncLink dynamic random access memory) and direct memory bus random access memory (DRRAM). The memory described in embodiments of the present disclosure is intended to include, but is not limited to, these and any other suitable types of memory.

In an exemplary embodiment, an embodiment of the present disclosure also provides a storage medium, that is, a computer storage medium, specifically a computer-readable storage medium, for example, including a memory 1203 storing a computer program executable by the processor 1202 of the testing equipment 1200 to complete the steps described in the aforementioned methods. The computer-readable storage medium may be a memory such as FRAM, ROM, PROM, EPROM, EEPROM, Flash memory, magnetic surface memory, optical disk, or CD-ROM.

It should be noted that "first", "second", and the like are used to distinguish similar objects, and are not necessarily used to describe a specific order or sequence.

In addition, the technical solutions described in the embodiments of the present disclosure may be arbitrarily combined unless there is no conflict.

The above are only preferred embodiments of the present disclosure, and are not intended to limit the scope of protection of the present disclosure.

## Claims

1. A testing method, comprising:
executing an in-device co-existence (IDC) problem test procedure on a terminal;
in a case where a first test result is not obtained, confirming whether the terminal detected an IDC problem in the IDC problem test procedure; and
generating a second test result for the terminal based on the confirmation of whether the terminal detected the IDC problem in the IDC problem test procedure.

2. The method of claim 1, wherein confirming whether the terminal detected the IDC problem in the IDC problem test procedure comprises:
constructing at least one test condition identical to that for the IDC problem test procedure;
for each of the at least one test condition, measuring at least one index associated with the IDC problem for the terminal to obtain at least one measurement result of the terminal; and
confirming whether the terminal detected the IDC problem in the IDC problem test procedure based on the at least one measurement result.

3. The method of claim 1, wherein confirming whether the terminal detected the IDC problem in the IDC problem test procedure comprises:
during executing the IDC problem test procedure on the terminal, for each of at least one constructed test condition, measuring at least one index associated with the IDC problem for the terminal, to obtain at least one measurement result of the terminal; and
confirming whether the terminal detected the IDC problem in the IDC problem test procedure based on the at least one measurement result.

4. The method of claim 2 or 3, wherein one of the following applies:
for a first test condition, measuring the at least one index associated with the IDC problem for the terminal; or
for a first test condition and a second test condition, measuring the at least one index associated with the IDC problem for the terminal, respectively;
wherein under the first test condition, an operating channel of a first receiver and an operating channel of a first transmitter of the terminal are configured to be in a minimum spacing state;
under the second test condition, the operating channel of the first receiver and the operating channel of the first transmitter of the terminal are configured to be in a maximum spacing state.

5. The method of claim 4, wherein the first transmitter is configured as being off under the second test condition.

6. The method of claim 2 or 3, wherein the index associated with the IDC problem comprises at least one of the following:
a reference sensitivity of a first receiver of the terminal; or
a throughput of the first receiver of the terminal.

7. The method of claim 2 or 3, wherein confirming whether the terminal detected the IDC problem in the IDC problem test procedure based on the at least one measurement result comprises:
when the at least one measurement result does not satisfy a first test requirement, it is indicated that the terminal detected the IDC problem in the IDC problem test procedure; or
when the at least one measurement result satisfies a first test requirement, it is indicated that the terminal did not detect the IDC problem in the IDC problem test procedure.

8. The method of claim 7, wherein indices associated with the first test requirement comprise N indices, N being an integer greater than or equal to 1;
wherein satisfying the first test requirement comprises at least one of the following:
at least one of the N indices is better than or equal to a corresponding threshold; or
a change of at least one of the N indices is better than or equal to a corresponding threshold.

9. The method of claim 7, wherein satisfying the first test requirement comprises at least one of the following:
a reference sensitivity of a first receiver of the terminal under a first test condition is better than or equal to a first threshold;
a throughput of the first receiver of the terminal under the first test condition is better than or equal to a second threshold;
a change in the reference sensitivity of the first receiver of the terminal under the first test condition and a second test condition is better than or equal to a third threshold; or
a change in the throughput of the first receiver of the terminal under the first test condition and the second test condition is better than or equal to a fourth threshold;
wherein under the first test condition, an operating channel of the first receiver and an operating channel of a first transmitter of the terminal are configured to be in a minimum spacing state;
under the second test condition, the operating channel of the first receiver and the operating channel of the first transmitter of the terminal are configured to be in a maximum spacing state.

10. The method of claim 9, wherein the method further comprises:
determining the third threshold and/or the fourth threshold based on a capability level of the terminal, wherein different capability levels correspond to different values of the third threshold and/or the fourth threshold.

11. The method of claim 1, wherein generating the second test result for the terminal based on the confirmation of whether the terminal detected the IDC problem in the IDC problem test procedure comprises:
in a case where the terminal detected the IDC problem in the IDC problem test procedure, the second test result indicates that the terminal does not pass the test; or
in a case where the terminal did not detect the IDC problem in the IDC problem test procedure, the second test result indicates that the terminal passes the test.

12. A testing method, comprising:
confirming whether a terminal detected an in-device co-existence (IDC) problem; and
when it is confirmed that the terminal detected the IDC problem, executing an IDC problem test procedure on the terminal to generate a third test result for the terminal; or
when it is confirmed that the terminal did not detect the IDC problem, executing an IDC problem construction procedure on the terminal; and after the IDC problem construction procedure is completed, executing an IDC problem test procedure on the terminal to generate a third test result for the terminal.

13. The method of claim 12, wherein confirming whether the terminal detected the IDC problem comprises:
constructing at least one test condition;
for each of the at least one test condition, measuring at least one index associated with the IDC problem for the terminal to obtain at least one measurement result of the terminal; and
confirming whether the terminal detected the IDC problem based on the at least one measurement result.

14. The method of claim 13, wherein the index associated with the IDC problem comprises at least one of the following:
a reference sensitivity of a second receiver of the terminal; or
a throughput of the second receiver of the terminal.

15. The method of claim 13, wherein confirming whether the terminal detected the IDC problem based on the at least one measurement result comprises:
in a case where the at least one measurement result satisfies a second test requirement, it is indicated that the terminal did not detect the IDC problem; or
in a case where the at least one measurement result does not satisfy a second test requirement when a second transmitter of the terminal is configured as not being off, and the at least one measurement result satisfies the second test requirement when the second transmitter of the terminal is configured as being off, it is indicated that the terminal detected the IDC problem.

16. The method of claim 15, wherein the method further comprises:
in a case where the at least one measurement result does not satisfy the second test requirement when the second transmitter of the terminal is configured as being off; or
in a case where the at least one measurement result does not satisfy the second test requirement when the second transmitter of the terminal is configured as not being off, and the at least one measurement result also does not satisfy the second test requirement when the second transmitter of the terminal is configured as being off,
generating a fourth test result for the terminal, the fourth test result indicating that the terminal does not pass the test.

17. The method of claim 15, wherein indices associated with the second test requirement comprise N indices, N being an integer greater than or equal to 1; and
wherein satisfying the second test requirement comprises at least one of the following:
at least one of the N indices is better than or equal to a corresponding threshold; or
a change of at least one of the N indices is better than or equal to a corresponding threshold.

18. The method of claim 15, wherein satisfying the second test requirement comprises at least one of the following:
a reference sensitivity of a second receiver of the terminal under a third test condition is better than or equal to a fifth threshold;
a throughput of the second receiver of the terminal under the third test condition is better than or equal to a sixth threshold;
a change in the reference sensitivity of the second receiver of the terminal under the third test condition and a fourth test condition is better than or equal to a seventh threshold; or
a change in the throughput of the second receiver of the terminal under the third test condition and the fourth test condition is better than or equal to an eighth threshold,
wherein under the third test condition, an operating channel of the second receiver and an operating channel of the second transmitter of the terminal are configured to be in a maximum spacing state;
under the fourth test condition, the operating channel of the second receiver and the operating channel of the second transmitter of the terminal are configured to be in a minimum spacing state.

19. The method of claim 12, wherein the method further comprises:
constructing at least one test condition;
for each of the at least one test condition, measuring at least one index associated with the IDC problem for the terminal to obtain at least one measurement result of the terminal;
in a case where the at least one measurement result does not satisfy a second test requirement when a second transmitter of the terminal is configured as being off; or,
in a case where the at least one measurement result does not satisfy the second test requirement when the second transmitter of the terminal is configured as not being off, and the at least one measurement result also does not satisfy the second test requirement when the second transmitter of the terminal is configured as being off,
generating a fourth test result for the terminal, the fourth test result indicating that the terminal does not pass the test.

20. The method of claim 12, wherein executing the IDC problem test procedure on the terminal after the IDC problem construction procedure is completed comprises:
in a case where the IDC problem construction procedure is completed and the terminal detected the IDC problem, executing the IDC problem test procedure on the terminal.

21. The method of claim 12, wherein
during the IDC problem construction procedure, taking a fifth test condition as an initial test condition, configuring an operating channel of a second receiver and an operating channel of a second transmitter of the terminal to be close to each other, or configuring an operating channel of a second transmitter of the terminal to be close to an operating channel of a second receiver, or configuring an operating channel of a second receiver of the terminal to be close to an operating channel of a second transmitter; wherein under the fifth test condition, the operating channel of the second receiver and the operating channel of the second transmitter of the terminal are configured to be in a maximum spacing state, and the second transmitter is configured as not being off;
when the test condition changes, measuring at least one index associated with the IDC problem on the terminal to obtain at least one measurement result of the terminal;
when the at least one measurement result does not satisfy a third test requirement, it is determined that the IDC problem construction procedure is completed and the terminal detected the IDC problem.

22. The method of claim 21, wherein indices associated with the third test requirement comprise N indices, N being an integer greater than or equal to 1;
wherein satisfying the third test requirement comprises at least one of the following:
at least one of the N indices is better than or equal to a corresponding threshold; or
a change of at least one of the N indices is better than or equal to a corresponding threshold.

23. The method of claim 21, wherein satisfying the third test requirement comprises at least one of the following:
a reference sensitivity of the second receiver of the terminal is better than or equal to a ninth threshold;
a throughput of the second receiver of the terminal is better than or equal to a tenth threshold;
a change in the reference sensitivity of the second receiver of the terminal under the current test condition and the fifth test condition is better than or equal to an eleventh threshold; or
a change in the throughput of the second receiver of the terminal under the current test condition and the fifth test condition is better than or equal to a twelfth threshold.

24. The method of claim 12, wherein executing the IDC problem construction procedure on the terminal comprises:
configuring the terminal with a first signal that enables the terminal to detect the IDC problem.

25. A testing apparatus, comprising:
a first testing unit, configured to perform an in-device co-existence (IDC) problem test procedure on a terminal;
a first confirmation unit, configured to confirm whether the terminal detected an IDC problem in the IDC problem test procedure when a first test result is not obtained; and
a second testing unit, configured to generate a second test result for the terminal based on the confirmation of whether the terminal detected the IDC problem in the IDC problem test procedure.

26. A testing apparatus, comprising:
a second confirmation unit, configured to confirm whether a terminal detected an in-device co-existence (IDC) problem; and
a third testing unit, configured to:
execute an IDC problem test procedure on the terminal to generate a third test result for the terminal when it is confirmed that the terminal detected the IDC problem; or
when it is confirmed that the terminal did not detect the IDC problem, execute an IDC problem construction procedure on the terminal; and after the IDC problem construction procedure is completed, execute an IDC problem test procedure on the terminal to generate a third test result for the terminal.

27. A testing equipment, comprising:
a communication interface; and
a processor,
wherein the processor is configured to: execute an in-device co-existence (IDC) problem test procedure on a terminal; confirm whether the terminal detected an IDC problem in the IDC problem test procedure when a first test result is not obtained; and generate a second test result for the terminal based on the confirmation of whether the terminal detected the IDC problem in the IDC problem test procedure; or,
wherein the processor is configured to: confirm whether a terminal detected an IDC problem; and when it is confirmed that the terminal detected the IDC problem, execute an IDC problem test procedure on the terminal to generate a third test result for the terminal; or, when it is confirmed that the terminal did not detect the IDC problem, execute an IDC problem construction procedure on the terminal, after the IDC problem construction procedure is completed, execute an IDC problem test procedure on the terminal to generate a third test result for the terminal.

28. A testing equipment, comprising:
a processor; and
a memory configured to store a computer program executable by the processor,
wherein the processor is configured to execute, when executing the computer program, the method of any one of claims 1 to 11, or the method of any one of claims 12 to 24.

29. A storage medium having stored thereon a computer program that, when executed by a processor, implements:
the method of any one of claims 1 to 11; or
the method of any one of claims 12 to 24.
